(19) Europäisches Patentamt
European Patent Office
Office européen des brevets

(11) **EP 4 277 217 A1**

(12) **EUROPEAN PATENT APPLICATION**
published in accordance with Art. 153(4) EPC

(43) Date of publication:
**15.11.2023 Bulletin 2023/46**

(21) Application number: **22752990.6**

(22) Date of filing: **09.02.2022**

(51) International Patent Classification (IPC):
**H04L 27/26** (2006.01)    **H04W 72/04** (2023.01)
**H04W 16/14** (2009.01)

(52) Cooperative Patent Classification (CPC):
**H04L 27/2628; H04W 16/14; H04W 72/04;**
H04L 5/0007; H04L 5/001; H04W 88/10

(86) International application number:
**PCT/KR2022/002002**

(87) International publication number:
**WO 2022/173230 (18.08.2022 Gazette 2022/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.02.2021  KR 20210018640**

(71) Applicant: Samsung Electronics Co., Ltd.
**Suwon-si, Gyeonggi-do 16677 (KR)**

(72) Inventors:
• **SHIM, Seijoon**
  **Suwon-si Gyeonggi-do 16677 (KR)**
• **HA, Kilsik**
  **Suwon-si Gyeonggi-do 16677 (KR)**
• **OH, Jongho**
  **Suwon-si Gyeonggi-do 16677 (KR)**

(74) Representative: **Gulde & Partner**
**Patent- und Rechtsanwaltskanzlei mbB**
**Wallstraße 58/59**
**10179 Berlin (DE)**

(54) **APPARATUS AND METHOD FOR PHASE COMPENSATION IN WIRELESS COMMUNICATION SYSTEM**

(57) The disclosure relates to a 5G or 6G communication system for supporting a higher data transmission rate. According to various embodiments of the disclosure, a method performed by a management device in a wireless communication system may include, based on dynamic spectrum sharing (DSS) for a first communication system and a second communication system, a process of identifying that a first digital unit (DU) for the first communication system and a second DU for the second communication system are related to one radio unit (RU) for up-conversion, based on whether orthogonal frequency-division multiplexing (OFDM) modulation is performed commonly or individually on a first signal of the first communication system and a second signal of the second communication system, and at least one network entity in which phase compensation for the DSS is performed, a process of obtaining configuration information for the phase compensation, and a process of transmitting the configuration information to the at least one network entity, wherein the at least one network entity may include at least one of the first DU, the second DU, or the RU.

FIG.3

**Description**

Technical Field

The disclosure relates to a wireless communication system. More particularly, the disclosure relates to an apparatus and a method for phase compensation in a wireless communication system.

Background Art

To meet the demand for wireless data traffic having increased since deployment of 4th generation (4G) communication systems, efforts have been made to develop an improved 5th generation (5G) or pre-5G communication system. Therefore, the 5G or pre-5G communication system is also called a 'Beyond 4G Network' or a 'Post long term evolution (LTE) System'.

The 5G communication system is considered to be implemented in higher frequency (millimeter (mm)Wave) bands, e.g., 60 gigahertz (GHz) bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, hybrid frequency shift keying (FSK) and quadrature amplitude modulation (QAM) (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

Introduction of 5G communication systems demands that network and communication operators construct 5G communication system infrastructures. Such introduction of new radio access technology (RAT) may be a burden on operators. In order to alleviate such a burden, there has been discussion regarding dynamic spectrum sharing (DSS) technology.

The above information is presented as background information only to assist with an understanding of the disclosure. No determination has been made, and no assertion is made, as to whether any of the above might be applicable as prior art with regard to the disclosure.

Disclosure of Invention

Technical Problem

Aspects of the disclosure are to address at least the above-mentioned problems and/or disadvantages and to provide at least the advantages described below. Accordingly, an aspect of the disclosure is to provide an apparatus and a method for phase compensation in a dynamic spectrum sharing (DSS) system of long-term evolution (LTE) and new radio (NR).

Another aspect of the disclosure is to provide an apparatus and a method for performing phase compensation for up-conversion in DSS in connection with a scheme for implementing distributed deployment between a digital unit (DU) and a radio unit (RU).

Another aspect of the disclosure is to provide an apparatus and a method for signaling related to spectrum sharing between a DU and a RU in a wireless communication system.

Additional aspects will be set forth in part in the description which follows and, in part, will be apparent from the description, or may be learned by practice of the presented embodiments.

Solution to Problem

In accordance with an aspect of the disclosure, a method performed by a management device in a wireless communication system is provided. The method includes, based on dynamic spectrum sharing (DSS) for a first communication system and a second communication system, identifying that a first digital unit (DU) for the first communication system and a second DU for the second communication system are related to one radio unit (RU) for up-conversion, based on whether orthogonal frequency-division multiplexing (OFDM) modulation is performed commonly or individually on a first signal of the first communication system and a second signal of the second communication system, and at least one network entity in which phase compensation for the DSS is performed, obtaining configuration information for the phase compensation, and transmitting the configuration information to the at least one network entity, wherein the at least one network entity includes at least one of the first DU, the second DU, or the RU.

In accordance with another aspect of the disclosure, a method performed by a digital unit (DU) for a new radio (NR) communication system in a wireless communication system is provided. The method includes, in dynamic spectrum sharing (DSS) for a long-term evolution (LTE) communication system and the NR communication system, obtaining center frequency information of the long-term evolution (LTE) communication system, performing phase compensation for up-conversion of the DSS based on the center frequency information, and transmitting the signal on which the phase compensation is performed to a radio unit (RU), wherein the RU is related to a DU for the NR communication system and a DU for the LTE communication system.

In accordance with another aspect of the disclosure, a management device in a wireless communication system is provided. The management device includes at least one transceiver, and at least one processor, wherein the at least one processor is configured to, based on dynamic spectrum sharing (DSS) for a first communication system and a second communication system, identify that a first digital unit (DU) for the first communication system and a second DU for the second communication system are related to one radio unit (RU) for up-conversion, based on whether orthogonal frequency-division multiplexing (OFDM) modulation is performed in common or individually on a first signal of the first communication system and a second signal of the second communication system, and at least one network entity in which phase compensation for the DSS is performed, obtain configuration information for the phase compensation, and transmit the configuration information to the at least one network entity, wherein the at least one network entity includes at least one of the first DU, the second DU, or the RU.

In accordance with another aspect of the disclosure, a device of a digital unit (DU) for a new radio (NR) communication system in a wireless communication system is provided. The device includes at least one transceiver, and at least one processor, wherein the at least one processor is configured to obtain center frequency information of the long-term evolution (LTE) communication system in dynamic spectrum sharing (DSS) for the long-term evolution (LTE) communication system and the NR communication system, perform phase compensation for up-conversion of the DSS based on the center frequency information, and transmit a signal on which the phase compensation is performed to a radio unit (RU), wherein the RU is related to a DU for the NR communication system and a DU for the LTE communication system.

Advantageous Effects of Invention

An apparatus and a method according to various embodiments of the disclosure may perform phase compensation in a dynamic spectrum sharing (DSS) system of long-term evolution (LTE) and new radio (NR) in connection with distributed deployment of a digital unit (DU) and a radio unit (RU) such that the RU can effectively transmit/receive radio signals.

Advantageous effects obtainable from the disclosure may not be limited to the above-mentioned effects, and other effects which are not mentioned may be clearly understood, through the following descriptions, by those skilled in the art to which the disclosure pertains.

Other aspects, advantages, and salient features of the disclosure will become apparent to those skilled in the art from the following detailed description, which, taken in conjunction with the annexed drawings, discloses various embodiments of the disclosure.

Brief Description of Drawings

FIG. 1A illustrates a wireless communication system according to an embodiment of the disclosure;
FIG. 1B illustrates an example of a dynamic spectrum sharing (DSS) environment of a long-term evolution (LTE) system and a new radio (NR) system according to an embodiment of the disclosure;
FIG. 2 illustrates an example of function split in a wireless communication system according to an embodiment of the disclosure;
FIG. 3 illustrates an example of phase compensation for each data in an LTE communication system and an NR communication system according to an embodiment of the disclosure;
FIG. 4A illustrates an example of NR center frequency-based up-conversion in a DSS environment of an LTE communication system and an NR communication system according to an embodiment of the disclosure;
FIG. 4B illustrates an example of LTE center frequency-based up-conversion in a DSS environment of an LTE communication system and an NR communication system according to an embodiment of the disclosure;
FIG. 5 illustrates an example of the configuration of each bandwidth part (BWP) of LTE and NR in the DSS environment of the LTE communication system and the NR communication system according to an embodiment of the disclosure;

FIG. 6 illustrates an example of a frequency shifter in a DSS environment of an LTE communication system and an NR communication system according to an embodiment of the disclosure;

FIG. 7 illustrates another example of a frequency shifter in a DSS environment of an LTE communication system and an NR communication system according to an embodiment of the disclosure;

FIG. 8 illustrates an example of a functional block for phase compensation according to an embodiment of the disclosure;

FIG. 9 illustrates an example of uplink phase compensation in a DSS environment of an LTE communication system and an NR communication system according to an embodiment of the disclosure;

FIG. 10 illustrates a functional configuration of a management device according to an embodiment of the disclosure;

FIG. 11A illustrates a functional configuration of a digital unit (DU) according to an embodiment of the disclosure;

FIG. 11B illustrates a functional configuration of a radio unit (RU) according to an embodiment of the disclosure; and

FIG. 12 illustrates a functional configuration of a terminal according to an embodiment of the disclosure.

The same reference numerals are used to represent the same elements throughout the drawings.

Best Mode for Carrying out the Invention

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Hereinafter, various embodiments of the disclosure will be described based on an approach of hardware. However, various embodiments of the disclosure include a technology that uses both hardware and software, and thus the various embodiments of the disclosure may not exclude the perspective of software.

Further, in the disclosure, various embodiments are described using terms used in some communication standards (e.g., long term evolution (LTE) and new radio (NR) defined by the 3rd generation partnership project (3GPP)), but they are illustrated merely for the purpose of description. Various embodiments of the disclosure may be easily modified and applied to other communication systems.

In the disclosure, in order to determine whether a specific condition is satisfied or fulfilled, an expression of more than or less than is used, but this is only a description to express an example and does not exclude a description of not less than or not more than. Conditions described as 'not less than' may be replaced with 'more than', conditions described as 'not more than' may be replaced with 'less than', and conditions described as ' not less than and not more than' may be replaced with 'more than and less than'.

Hereinafter, the disclosure describes a technique for efficiently performing phase compensation when different radio access technologies (RATs) coexist in the same frequency spectrum in a wireless communication system. Different physical layer processing is defined in each of the long-term evolution (LTE) communication system and the new radio (NR) communication system, but because signals are transmitted in the same frequency band, a procedure for coexistence between the two is required. In particular, the disclosure proposes procedures, signaling, and operations for coexistence of the DU of the LTE communication system and the DU of the NR communication system in a structure in which a digital unit (DU) and a radio frequency (RF) unit or radio unit (RU) are separated.

In the following description, terms for identifying access nodes, terms referring to network entities, terms referring to messages, terms referring to signaling, terms referring to interfaces between network entities, terms referring to various identification information, and the like are illustratively used for the sake of convenience. Therefore, the disclosure is not limited by the terms as used below, and other terms referring to subjects having equivalent technical meanings may be used.

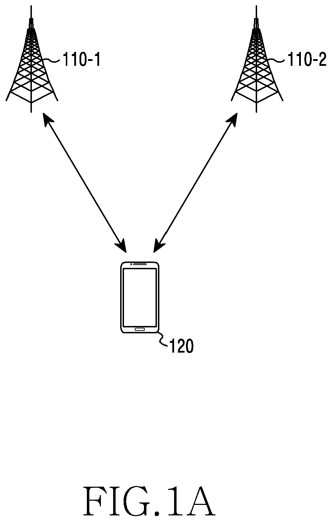

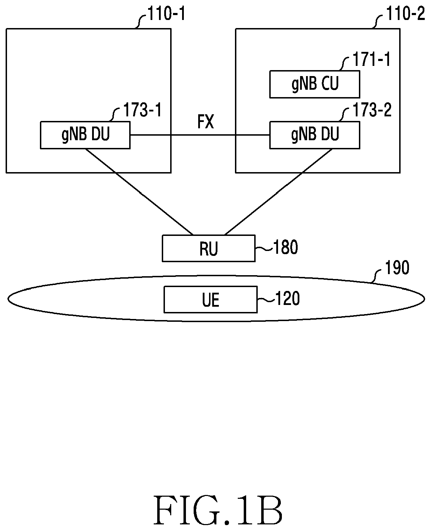

FIG. 1A illustrates a wireless communication system according to an embodiment of the disclosure. FIG. 1 illustrates base stations 110-1 and 110-2 and a terminal 120 as some of nodes using a radio channel in a wireless communication system. The base stations 110-1 and 110-2 may communicate while sharing the same spectrum band with the terminal 120. Hereinafter, for convenience of description, a common description of each of the base stations 110-1 and 110-2 may be described by referring to the base station 110. In the disclosure, a situation in which two base stations share a frequency band is described as an example, but the embodiments described below may also be applied to three or more base stations.

Referring to FIG. 1A, base stations 110-1 and 110-2 are network infrastructures that provide wireless access to a terminal 120. The base station 110 has a coverage defined as a certain geographic area based on a distance capable of transmitting a signal. Hereinafter, the term 'coverage' used may refer to a service coverage area of the base station 110. The base station 110 may cover one cell or may cover multiple cells. Here, multiple cells may be divided by a supported frequency and a covered sector area.

The base station 110 may be referred to as an access point (AP), evolved Node B (eNodeB, eNB), 5G node (5th generation node), 5G NodeB (NB), next generation node B (gNB), wireless point, transmission/reception point (TRP), central unit (CU), distributed unit (DU), radio unit (RU), a remote radio head (RRH), or other terms having an equivalent technical meaning in addition to base station. According to various embodiments, the base station 110 may be connected to one or more transmission/reception points (TRP). The base station 110 may transmit a downlink signal to the terminal 120 or receive an uplink signal through one or more TRPs. Although not illustrated in FIG. 1A, in the 5G system, to support network function virtualization, more efficient resource management, and scheduling, the base station may be implemented in a distributed deployment. For example, in the 5G system, the base station (gNB) may be further divided into a central unit (CU) and a distributed unit (DU). The CU has at least radio resource control (RRC) and packet data convergence protocol (PDCP) protocol layers, and may include service data adaptation protocol (SDAP). DU has radio link control protocol (RLC), medium access control (MAC), physical layer, etc. There is a standardized public interface F1 between CU and DU. The F1 interface is divided into a control plane F1-C and a user plane F1-U. The transport network layer of F1-C is based on IP transport. In order to transmit signaling more reliably, a stream control transmission protocol (SCTP) protocol is added over an Internet protocol (IP). The application layer protocol is F1AP. SCTP may provide reliable application layer messaging. The transport layer of F1-U is user datagram protocol (UDP)/IP. General packet radio service (GPRS) tunneling protocol (GTP)-U is used over UDP/IP to perform user plane protocol data unit PDUs.

The terminal 120 is a device used by a user, and performs communication with the base station 110 through a wireless channel. In some cases, the terminal 120 may be operated without the user's involvement. That is, at least one of the terminals 120 is a device that performs machine type communication (MTC) and may not be carried by the user. The terminal 120 may be referred to as a user equipment (UE), mobile station (MS), subscriber station, customer premises equipment (CPE), remote terminal, wireless terminal, electronic device, vehicle terminal, user device, or other terms having an equivalent technical meaning in addition to terminal.

A communication node (e.g., a terminal, a base station, and an entity of a core network) according to various embodiments of the disclosure may operate in an LTE communication system. In addition, a communication node (e.g., a terminal, a base station, and an entity of a core network) according to various embodiments of the disclosure may operate in an NR communication system. In addition, a communication node (e.g., a terminal, a base station, and an entity of a core network) according to various embodiments of the disclosure may operate in both an LTE communication system and an NR communication system. Although not illustrated in FIG. 1A, the base station 110-1 or the base station 110-2 may be connected to an evolved packet core (EPC) network which is a core of a 4G network or a 5th generation core (5GC) network.

Conventionally, in a communication system having a relatively large cell radius of a base station, each base station is installed to include the functions of a digital processing unit (or a digital unit (DU)) and a radio frequency (RF) processing unit (or a radio unit (RU)). However, as a high frequency band is used in 4G (4th generation) and/or later communication systems and the cell radius of the base station becomes smaller, the number of base stations to cover a specific area has increased. In addition, the burden of the installation cost of the operator for installing the increased base station has increased. In order to minimize the installation cost of the base station, a structure has been proposed in which the DU and RU of the base station are separated, one or more RUs are connected to one DU through a wired network, and one or more RUs geographically distributed to cover a specific area are disposed. Hereinafter, the arrangement structure and extended examples of the base station according to various embodiments of the disclosure will be described with reference to FIG. 1B.

FIG. 1B illustrates an example of a dynamic spectrum sharing (DSS) environment of a long-term evolution (LTE) system and a new radio (NR) system according to an embodiment of the disclosure. In FIG. 1B, a situation in which the base station of FIG. 1A is separately implemented as DU and RU is described. For example, the base station 110-1 may include a first node and an RU. The base station 110-2 may include a second node and an RU.

Referring to FIG. 1B, a first node 160-1 may include a gNB DU 173-1. The gNB DU 173-1 of the first node 160-1 may be connected to the RU 180. The RU 180 is an eNB RU, and may function as a part of the first node 160-1. The second node 160-2 may include a gNB-CU 171-1 and a gNB DU 173-2. The gNB DU 173-2 of the second node 160-2 may be connected to the RU 180. Although the gNB CU 171-1 and the gNB DU 173-2 are illustrated in FIG. 1B, this arrangement structure is not limited to the embodiment of the disclosure. That is, the gNB CU 171-1 and the gNB DU 173-2 are DUs for the NR communication system, and may be configured as one functional entity.

The second node 160-2 may communicate with the first node 160-1 through an FX interface. For example, communication between the gNB DU 173-1 and the gNB DU 173-2 may be performed. As the gNB DU for NR is additionally connected in the existing LTE base station, the RU 180 is the same carrier frequency, but the NR cell as well as the LTE cell may be provided to the terminal (e.g., NR and LTE cells 190). The base station (e.g., first node 160-1) may flexibly allocate spectrum in low, medium, and high frequency bands to the terminal 120 through dynamic switching between LTE and 5G NR according to traffic demand. According to flexible spectrum allocation, high communication performance and stable communication range may be provided to the terminal 120.

Although the structure in which the CU and the DU are separated has been exemplarily described, the separated structure is only an aspect of implementation and does not limit the embodiments of the disclosure. That is, a situation in which the DU directly provides a cell to the terminal without separation of the CU and the DU may also be understood as an embodiment of the disclosure. In addition, in FIG. 1B, each node and entity are illustrated as an independent configuration to explain a spectrum sharing scenario, but this is only an example for explaining functional separation, and this illustration is not to be construed as limiting the embodiments of the disclosure. Each entity may be a physically independent device or may be in the form of software implemented to perform other functions.

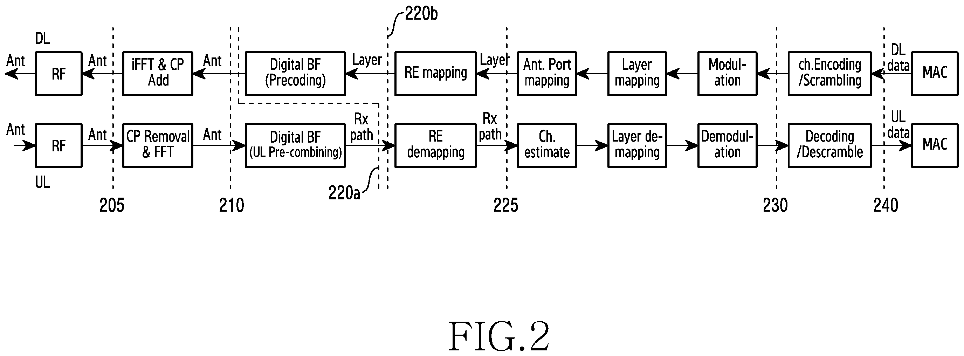

FIG. 2 illustrates an example of function split in a wireless communication system according to an embodiment of the disclosure. As wireless communication technology develops (e.g., introduction of 5th generation (5G) communication system or new radio (NR) communication system), the frequency band used gets higher, and as the cell radius of the base station becomes very small, the number of RUs required to be installed further increases. In addition, in the 5G communication system, the amount of data to be transmitted is increased by 10 times or more, and the transmission capacity of the wired network transmitted through the fronthaul has greatly increased. Due to these factors, the installation cost of a wired network in a 5G communication system may increase significantly. Accordingly, in order to lower the transmission capacity of the wired network and reduce the installation cost of the wired network, as illustrated in FIG. 1B, techniques for lowering the transmission capacity of the fronthaul by transferring some functions of the modem of the DU to the RU have been proposed, and these techniques may be referred to as 'function split'.

In order to reduce the burden of the DU, a method of extending the role of the RU responsible for only the RF function to some functions of the physical layer is considered. In this case, as the RU performs the functions of an upper layer, the throughput of the RU may increase to increase the transmission bandwidth in the fronthaul, and at the same time, the delay time requirement constraint due to the response processing may be lowered. On the other hand, as the RU performs functions of an upper layer, the virtualization gain decreases and the size/weight/cost of the RU increases. Considering the trade-offs of the advantages and disadvantages described above, it is required to implement an optimal function split.

Referring to FIG. 2, function splits in the physical layer below the medium access control (MAC) layer are illustrated. In the case of downlink (DL) transmitting a signal to the terminal through a wireless network, the base station may sequentially perform channel encoding/scrambling, modulation, layer mapping, antenna mapping, resource element mapping, digital beamforming (e.g., precoding), inverse fast Fourier transform (IFFT) conversion/cyclic prefix (CP) insertion, and RF conversion. In the case of an uplink (UL) receiving a signal from a terminal through a wireless network, the base station may sequentially perform RF conversion, fast Fourier transform (FFT) conversion/CP removal, digital beamforming (pre-combining), RE de-mapping, channel estimation, layer de-mapping, demodulation, and decoding/descrambling. Split of uplink functions and downlink functions may be defined in various types by necessity between vendors, discussion on standards, etc. according to the above-described trade-off.

The first function split 205 may be split of RF functions and physical layer (PHY) functions. The first function split is that the PHY function in the RU is not implemented substantially, and as an example, may be referred to as Option 8. The second function split 210 is that the RU performs IFFT conversion/CP insertion in DL of the PHY function and FFT conversion/CP removal in UL, and the DU performs the remaining PHY functions. As an example, the second function split 210 may be referred to as Option 7-1. The third function split 220a is that the RU performs IFFT conversion/CP insertion in DL of the PHY function, and FFT conversion/CP removal and digital beamforming in UL, and the DU performs the remaining PHY functions. As an example, the third function split 220a may be referred to as Option 7-2x Category A. The fourth function split 220b is that the RU performs up to digital beamforming in both DL and UL, and the DU performs higher PHY functions after digital beamforming. As an example, the fourth function split 220b may be referred to as Option 7-2x Category B. The fifth function split 225 is that the RU performs up to RE mapping (or RE de-mapping) in both DL and UL, and the DU performs higher PHY functions after RE mapping (or RE de-mapping). As an example, the fifth function split 225 may be referred to as Option 7-2. The sixth function split 230 is that the RU performs up to modulation (or demodulation) in both DL and UL, and the DU performs higher PHY functions after modulation (or demodulation). As an example, the sixth function split 230 may be referred to as Option 7-3. The seventh function split 240 is that the RU performs up to encoding/scrambling (or decoding/descrambling) in both DL and UL, and the DU performs higher PHY functions after modulation (or demodulation). As an example, the seventh function split 240 may be referred to as Option 6.

According to an embodiment, when large-capacity signal processing is expected such as the frequency range 1 (FR1) massive MIMO unit (MMU), function split in a relatively high layer (e.g., fourth function split 220b) may be required to reduce the fronthaul capacity. In addition, because the function split at too high of a layer (e.g., sixth function split 230) may cause a burden on the implementation of the RU by complicating the control interface and including a large number of PHY processing blocks in the RU, appropriate function splits may be required depending on the arrangement and implementation method of the DU and the RU.

According to an embodiment, if precoding of data received from the DU cannot be processed (that is, if there is a limit to the precoding capability of the RU), the third function split 220a or lower function split (e.g., the second function split 210) may be applied. Conversely, if there is an ability to process the precoding of data received from the DU, the fourth function split 220b or higher function split (e.g., 6th function split 230) may be applied. Hereinafter, various embodiments in the disclosure, unless otherwise limited, are described based on the third function split 220a (Category A), the fourth function split 220b (Category B), or the fifth function split 225 for performing the beamforming process in the RU, but the configuration of the embodiment through other function splits is not excluded.

Recently, as the New Radio (NR) standard, which is the 5th generation data transmission method, has been completed by Release 16, interest in the NR system, which is a large-capacity data transmission method, has increased, and the demand for re-farming the existing LTE frequency to NR is increasing. Accordingly, during re-farming, a dynamic spectrum sharing (hereinafter, DSS) system between NR-LTE and data transmission support through the DSS system are required. The disclosure proposes a phase compensation scheme for LTE and NR, respectively, considering the difference between the up-conversion method of the NR communication system and the LTE communication system and the split implementation method between the DU and the RU. The disclosure analyzes a transmission/reception waveform equation and accordingly proposes a technique for page compensation according to center frequency information in an NR, LTE, narrowband (NB)-internet of everything (IOT) transmission/reception ends. Embodiments of the disclosure may include a necessary phase compensation value, an apparatus, a method, and a system using the same. Hereinafter, downlink transmission is described as an example, but embodiments of the disclosure are not limited thereto. Embodiments of the disclosure to be described later may be applied in the same or similar manner to uplink transmission or sidelink transmission.

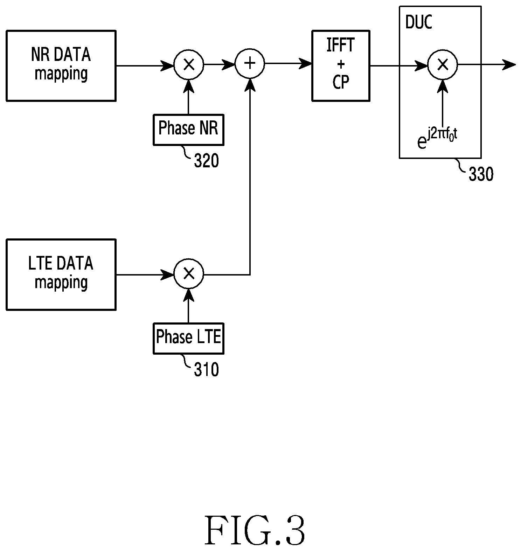

FIG. 3 illustrates an example of phase compensation for each data in an LTE communication system and an NR communication system according to an embodiment of the disclosure. The LTE communication system and the NR communication system support orthogonal frequency-division multiplexing (OFDM) as a waveform. The OFDM baseband signal is transmitted to the wireless channel (i.e., in air) through the antenna port after modulation and up-conversion. Up-conversion is required to change the baseband frequency to a carrier frequency for wireless signal transmission. The up-conversion of LTE is defined as in Equation 1 below. The up-conversion of NR is defined as in Equation 2 below.

$$s_{lte}(t) = e^{j2\pi f_{lte}t} \sum_{m=0}^{\infty} s_{lte,m}(t) \qquad \dots \text{Equation 1}$$

$$s_{nr}(t) = \sum_{m=0}^{\infty} s_{nr,m}(t) e^{j2\pi f_{nr}\left(t - \left(N_{cp,m} + \sum_{l=0}^{m-1}(N_{cp,l} + N_{ifft})\right)T_s\right)}$$

$$\dots \text{Equation 2}$$

Here, $f_{lte}$ and $f_{nr}$ are center frequency information of LTE and NR,

$N_{cp,m}$ is the cyclic prefix (CP) length of the m-th symbol, $N_{ifft}$ is the inverse fast Fourier transform (IFFT) size, and $T_s$ is the sampling rate (the unit is second). Unlike LTE, NR is standardized to multiply phase information as much as $e^{-j2\pi f_{nr}\left(N_{cp,m} + \sum_{l=0}^{m-1}(N_{cp,l} + N_{ifft})\right)T_s}$ for each symbol of NR data in addition to up-conversion to frequency $f_{nr}$ of $e^{-j2\pi f_{nr}t}$.

Referring to FIG. 3, for the implementation of the LTE communication system and the NR communication system, a situation in which two DUs and one RU are implemented is exemplified. In order to reduce the implementation waste of the RF port, when NR-LTE DSS is applied, the RU may be implemented to perform up-conversion. Because an RU centered on up-conversion is implemented in one transmission RF port, one or more modulation operations (e.g., IFFT) may be processed at the same time when the NR communication system and LTE communication system have the same numerology (e.g., subcarrier spacing (SCS) is all 15 kHz (kilohertz)). The signal of the NR communication system and the signal of the LTE communication system may be combined in a frequency domain. After the two signals are mixed, IFFT is applied. A cyclic prefix (CP) is applied to a signal to which the IFFT is applied. A transmission signal to which IFFT and CP are applied is up-converted based on the NR center frequency, and thus may be expressed as the following equation.

$$s_{nr+lte}(t) = \sum_{m=0}^{\infty} s_{nr+lte,m}(t)e^{j2\pi f_{nr}\left(t-\left(N_{cp,m}+\Sigma_{l=0}^{m-1}(N_{cp,l}+N_{ifft})\right)T_s\right)}$$

$$s_{nr+lte}(t) = e^{j2\pi f_{nr}t}\sum_{m=0}^{\infty}\left(s_{nr,m}(t)\underbrace{e^{-j2\pi f_{nr}\left(N_{cp,m}+\Sigma_{l=0}^{m-1}(N_{cp,l}+N_{ifft})\right)T_s}}_{phase\ due\ to\ NR\ upconversion}\right.$$

$$\left.+\ s_{lte,m}(t)\underbrace{e^{j2\pi f_d\left(t-\left(N_{cp,m}+\Sigma_{l=0}^{m-1}(N_{cp,l}+N_{ifft})\right)T_s\right)}}_{\substack{phase\ due\ to\ freq\ shift\\in\ case\ of\ the\ same\ ifft\ framework}}\right)$$

$$\dots \text{Equation 3}$$

Here, $f_d = f_{lte} - f_{nr}$, and $s_{nr,m}(t)$ and $s_{lte,m}(t)$ are the NR signal and the LTE signal of the m-th symbol, respectively. In the digital up-converter, it is assumed that the up-conversion operates according to the NR center frequency $f_{nr}$.

Because the same IFFT is performed, a frequency shift is performed. The phase information $e^{j2\pi f_d\left(t-\left(N_{cp,m}+\Sigma_{l=0}^{m-1}(N_{cp,l}+N_{ifft})\right)T_s\right)}$ attached to the LTE signal is phase information for aligning the symbol phase zero point when the frequency shift processing is performed by the frequency difference of f_d when the center frequency of NR and the center frequency of LTE are different. If only the LTE signal is separated into $s'_{lte}(t)$ in Equation 3, it may be expressed as the following Equation.

$$s'_{lte}(t) = e^{j2\pi f_{lte}t}\sum_{m=0}^{\infty}e^{-j2\pi f_d t}\left(s_{lte,m}(t)e^{j2\pi f_d\left(t-\left(N_{cp,m}+\Sigma_{l=0}^{m-1}(N_{cp,l}+N_{ifft})\right)T_s\right)}\right)$$

$$s'_{lte}(t) = e^{j2\pi f_{lte}t}\sum_{m=0}^{\infty}s_{lte,m}(t)e^{-j2\pi f_d\left(N_{cp,m}+\Sigma_{l=0}^{m-1}(N_{cp,l}+N_{ifft})\right)T_s}$$

$$\dots \text{Equation 4}$$

Comparing Equation 4 and Equation 1, the phase compensation value $\alpha_m$ required for the LTE signal may be obtained based on the following Equation. The phase compensation may be performed in LTE symbol units (symbol-by symbol).

$$\alpha_m = e^{+j2\pi f_d\left(N_{cp,m}+\Sigma_{l=0}^{m-1}(N_{cp,l}+N_{ifft})\right)T_s} \qquad \dots \text{Equation 5}$$

In order to support Equation 2, which is the same up-conversion equation as the standard in NR, a phase compensation value $\beta_m$ required for the NR signal may be obtained based on the following equation. The phase compensation may be performed in NR symbol units (symbol-by symbol).

$$\beta_m = e^{-j2\pi f_{nr}\left(N_{cp,m}+\Sigma_{l=0}^{m-1}(N_{cp,l}+N_{ifft})\right)T_s} \qquad \dots \text{Equation 6}$$

Here, the component $\tau_m = \left(N_{cp,m}+\sum_{l=0}^{m-1}(N_{cp,l}+N_{ifft})\right)T_s$ is the symbol accumulation time, and the $\tau_m$ may be repeated every predetermined period (e.g., 0.5 ms (millisecond)). In the NR communication system, one slot includes 14 OFDM symbols. The slot length and OFDM symbol length depend on the numerology, that is SCS. Accordingly, the number of symbols repeated according to the SCS numerology of the communication system is illustrated in the following table.

Table 1

| scs (kHz) | Number of symbols for $\tau_m$ duration |
|---|---|
| 15 | 7 |
| 30 | 14 |
| 60 | 28 |
| 120 | 56 |
| 240 | 112 |

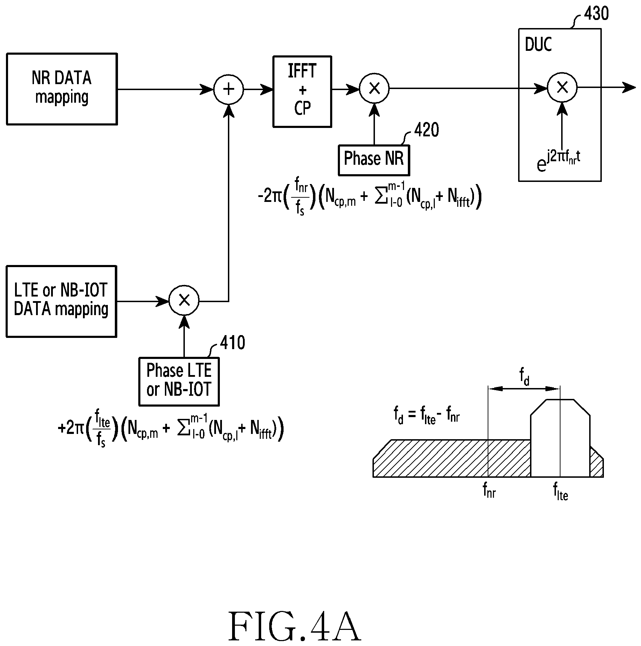

As described above, in the DSS environment of the LTE communication system and the NR communication system, it may be confirmed that normal transmission and reception in the RU are possible only when an independent phase compensation value is applied to each LTE and NR data. In each communication system, the phase compensation value may be set differently according to an implementation method of the DSS system between NR-LTE. FIG. 3 illustrates a situation in which phase compensation is performed in each of NR and LTE before IFFT, based on up-conversion of the NR communication system. The phase compensation value may be set according to the function split of the DU and the RU and the function implementation shape for the DSS. Hereinafter, embodiments of LTE phase compensation ($\alpha_m$) and NR phase compensation ($\beta_m$) settings according to the implementation shape of the NR communication system and the LTE communication system will be described with reference to FIGS. 4A, 4B, and 5 to 7. In the disclosure, the phase compensation value may be expressed as a function value of the center frequency of the communication system (e.g., LTE, NR, and NB-IOT). With respect to the sampling frequency, a relative value of the center frequency may be used for phase compensation. For example, based on the $f_{lte}$ / $f_s$ and $f_{nr}$ / $f_s$ sizes, LTE phase compensation and NR phase compensation may be performed, respectively.

In addition, for convenience of description, embodiments are described based on the LTE communication system and the NR communication system, but operations for LTE signals or related procedures in the eNB DU may be equally applied to the NB-IOT signal.

FIG. 4A illustrates an example of NR center frequency-based up-conversion in a DSS environment of an LTE communication system and an NR communication system according to an embodiment of the disclosure. FIG. 4A illustrates an NR phase compensation after the NR signal and the LTE signal are combined in the time domain, that is, in a situation in which IFFT is performed after the NR signal and the LTE signal are combined. This DSS operation may be referred to as DSS configuration type 1.

Referring to FIG. 4A, LTE phase compensation 410 is performed on the LTE signal. Thereafter, after IFFT and CP are applied to the LTE signal and the NR signal, NR phase compensation 420 is performed. According to an embodiment, the NR phase compensation 420 is commonly applied to the NR plus LTE path in the DU-RU split shape. The function split in that structure may be 7-2a. In addition, according to an embodiment, the NR phase compensation 420 may be applied when adding an LTE DU to a previously developed NR base station structure (DU/RU).

Each of the LTE phase compensation 410 ($\alpha_m$) and the NR phase compensation 420 ($\beta_m$) may be determined based on the following equation. The phase compensation may be performed in symbol-by symbol units.

$$\alpha_m = e^{+j2\pi f_{lte}\left(N_{cp,m}+\sum_{l=0}^{m-1}\left(N_{cp,l}+N_{ifft}\right)\right)T_s} \qquad \text{... Equation 7}$$

$$\beta_m = e^{-j2\pi f_{nr}\left(N_{cp,m}+\sum_{l=0}^{m-1}\left(N_{cp,l}+N_{ifft}\right)\right)T_s} \qquad \text{... Equation 8}$$

Compared with the configuration of FIG. 3, because phase compensation is not performed at the DU (e.g., gNB DU) of the NR, the NR phase compensation 420 may be implemented in the same manner as Equation 2. However, because the LTE DU is added to the existing NR base station shape (DU-RU), Equation 1 must be derived through the DU (e.g., eNB DU) LTE phase compensation 410 of LTE and NR phase compensation 420. Accordingly, Equation 7 may be derived from Equation 1 considering '$f_d = f_{lte} - f_{nr}$'.

The LTE phase compensation 410 is applied to the LTE signal. According to an embodiment, the LTE phase compensation 410 may be performed at the LTE DU end. According to an embodiment, the RU may receive LTE data (or NB-IoT signal) from the DU of the LTE communication system. According to an embodiment, the RU may receive NR data from a DU of an NR communication system. Thereafter, IFFT and CP insertion are commonly applied to both the LTE signal and the NR signal. The NR phase compensation 420 is applied to the signal modulated according to the IFFT. According to an embodiment, the RU may apply the NR phase compensation 420 to the result signal on which the IFFT and CP insertion are performed without distinction between the LTE signal and the NR signal. Thereafter, the RU may perform up-conversion 430. The up-conversion 430 may be performed assuming a continuous phase implementation between symbols.

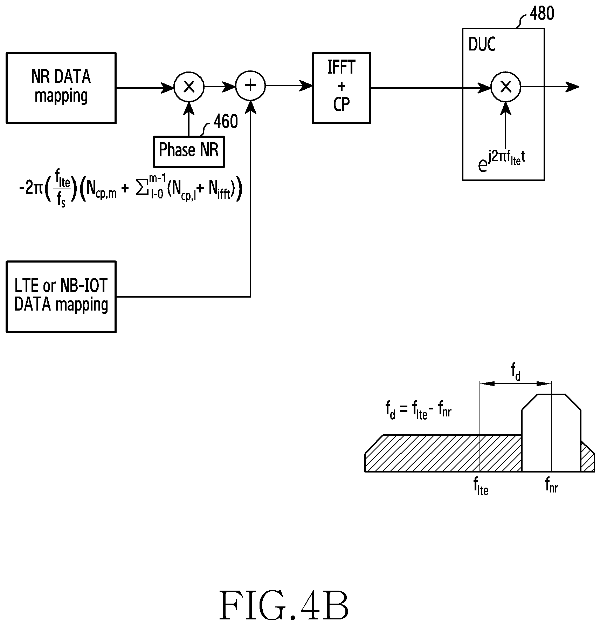

In FIG. 4A, a situation in which phase compensation is performed after IFFT has been described (DSS configuration type 1). As in the function split 7-2, when IFFT is performed in an RU rather than a DU, the LTE phase compensation may be redesigned based on NR phase compensation. According to an embodiment, when LTE DU is added to an existing NR base station, the LTE phase compensation 410 and the NR phase compensation 420 as illustrated in FIG. 4A may be applied. In DSS configuration type 1, the reverse situation of LTE and NR may also be understood as an embodiment of the disclosure. Hereinafter, embodiments of the disclosure in a configuration structure in which NR DU is added to an LTE base station will be described with reference to FIG. 4B.

FIG. 4B illustrates an example of LTE center frequency-based up-conversion in a DSS environment of an LTE communication system and an NR communication system according to an embodiment of the disclosure. As mentioned in Equation 1, because there is no separate phase compensation in the existing LTE, phase compensation may not be performed in the shape of the LTE base station.

Referring to FIG. 4B, separate phase compensation is not performed on the LTE signal, but NR phase compensation 460 may be performed on the NR signal. After IFFT and CP are applied to the baseband signal, up-conversion 480 may be performed. According to an embodiment, the NR phase compensation 460 may be applied only to DUs in a DU-RU split shape. Because only the NR path is added to the existing LTE path, the NR phase compensation 460 may be performed by the added NR DU.

In the previously installed RU product, that is, the device to which the frequency band and channel filtering are applied to up-conversion to the LTE center frequency in the LTE RU, a separate component for phase compensation does not exist. In order to perform NR-LTE DSS by attaching only NR DU to RU of LTE, phase compensation is applied only to NR data. A transmission signal to which IFFT and CP are applied is up-converted based on the LTE center frequency, and may be expressed as the following equation.

$$s_{nr+lte}(t) = \sum_{m=0}^{\infty} s_{nr+lte,m}(t) e^{j2\pi f_{lte}}$$

$$s_{nr+lte}(t) = e^{j2\pi f_{lte}t} \sum_{m=0}^{\infty} \left( s_{nr,m}(t) + s_{lte,m}(t) \right)$$

… Equation 9

The NR phase compensation 460 applied to the NR data may be determined based on the following equation. The phase compensation may be performed in symbol-by symbol units.

$$\beta_m = e^{-j2\pi f_{lte}\left(N_{cp,m} + \sum_{l=0}^{m-1}(N_{cp,l} + N_{ifft})\right)T_s}$$

… Equation 10

The NR phase compensation 460 is applied to the NR signal. According to an embodiment, the NR phase compensation 460 may be performed at the NR DU end. According to an embodiment, the RU may receive LTE data (or NB-IoT signal) from the DU of the LTE communication system. According to an embodiment, the RU may receive NR data from a DU of an NR communication system. Thereafter, IFFT and CP insertion are commonly applied to both the LTE signal and the NR signal. Thereafter, the RU may perform up-conversion 480. The up-conversion 430 may be performed assuming a continuous phase between symbols. Because up-conversion is applied based on the LTE center frequency, there is no need to perform separate phase compensation in the LTE DU end (e.g., eNB DU). However, because the NR signal needs to be up-converted after being combined with the LTE signal, the NR DU end (e.g., gNB DU) may perform phase compensation based on the center frequency ($f_{lte}$) of the LTE signal.

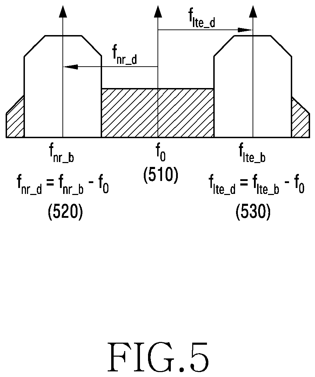

FIG. 5 illustrates an example of the configuration of each bandwidth part (BWP) of LTE and NR in the DSS environment of the LTE communication system and the NR communication system according to an embodiment of the disclosure. In a shape in which the bandwidth (or BWP) is separately operated and supported in the LTE communication system and the NR communication system, SCS numerology may be configured differently. In addition, the center frequency ($f_{lte}$) of the bandwidth of LTE and the center frequency ($f_{nr}$) of the BWP of NR may be different. The NR and LTE are separated from the DU by the path, and the CP is attached after separate IFFT processing. Thereafter, up-conversion is performed in a digital upconverter (DUC) through up-sampling and filtering in the time domain in order to prevent wastage of the RF path.

Referring to FIG. 5, an up-conversion frequency 510 may be $f_0$. The up-conversion may be performed in a single path. Because it is necessary to independently frequency shift each of the LTE signal and the NR signal, based on $f_0$, NR frequency compensation information ($f_{nr\_d}$)(520) for the NR center frequency ($f_{nr}$) and LTE frequency compensation information ($f_{nr\_lte}$)(530) for the LTE center frequency ($f_{lte}$) need to be defined. According to an embodiment of the disclosure, an NR phase compensation value may be calculated based on the NR frequency compensation information 520. In addition, according to an embodiment of the disclosure, an LTE phase compensation value may be calculated based on the LTE frequency compensation information 530.

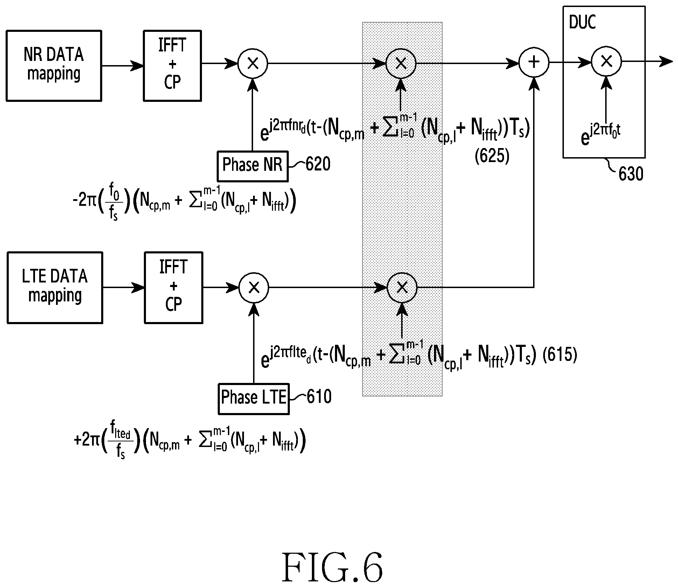

FIG. 6 illustrates an example of a frequency shifter in a DSS environment of an LTE communication system and an NR communication system according to an embodiment of the disclosure. FIG. 6 describes phase compensation performed separately after IFFT and CP insertion are applied to the NR signal and the LTE signal, respectively. This DSS operation may be referred to as DSS configuration type 2.

Referring to FIG. 6, the base station may include a frequency shifter for frequency shifting to BWP. According to an embodiment, the frequency shifter may be implemented to have a zero phase (hereinafter referred to as frequency shifter type A). When this type of frequency shifter is implemented as a system, LTE phase compensation 610 and NR phase compensation 620 may be determined based on the following equations. The phase compensation may be performed in symbol-by symbol units.

$$\alpha_m = e^{+j2\pi f_{lte_d}\left(N_{cp,m}+\sum_{l=0}^{m-1}(N_{cp,l}+N_{ifft})\right)T_s} \qquad \text{... Equation 11}$$

$$\beta_m = e^{-j2\pi f_0\left(N_{cp,m}+\sum_{l=0}^{m-1}(N_{cp,l}+N_{ifft})\right)T_s} \qquad \text{... Equation 12}$$

Here, $f_{lte_d} = f_{lte_b} - f_0$, $f_0$ represents an up-conversion center frequency, and $f_{lte_b}$ represents an LTE BW center frequency, respectively.

The frequency shifter processing NR and LTE signals transits $f_{nr_b}$ to $f_0$ and $f_{lte_b}$ to $f_0$. According to an embodiment, the NR BWP and the LTE BW may be configured to have different numerology. For example, the NR BWP may be 30 kHz, and the LTE BW may be 15 kHz. In addition, as an example, the NR BWP may be 120 kHz, and the LTE BW may be 15 kHz. In order to aggregate the two signals in the time domain, frequency shifting may be performed. Because the frequency shifter has a zero phase, $\left(N_{cp,m} + \sum_{l=0}^{m-1}(N_{cp,l} + N_{ifft})\right)T_s$ may be applied during frequency shifting. A value of the frequency shifting 615 for the LTE signal and a value of the frequency shifting 625 for the NR signal may be determined based on the following equations. The phase compensation may be performed in symbol-by symbol units.

$$x = e^{j2\pi fnr_d\left(t-(N_{cp,m}+\sum_{l=0}^{m-1}(N_{cp,l}+N_{ifft}))\right)T_s} \qquad \text{... Equation 13}$$

$$y = e^{j2\pi flte_d\left(t-(N_{cp,m}+\sum_{l=0}^{m-1}(N_{cp,l}+N_{ifft}))\right)T_s} \qquad \text{... Equation 14}$$

Thereafter, the RU may perform up-conversion 630 based on fa, which is the center frequency of the up-conversion. The up-conversion is performed at DUC.

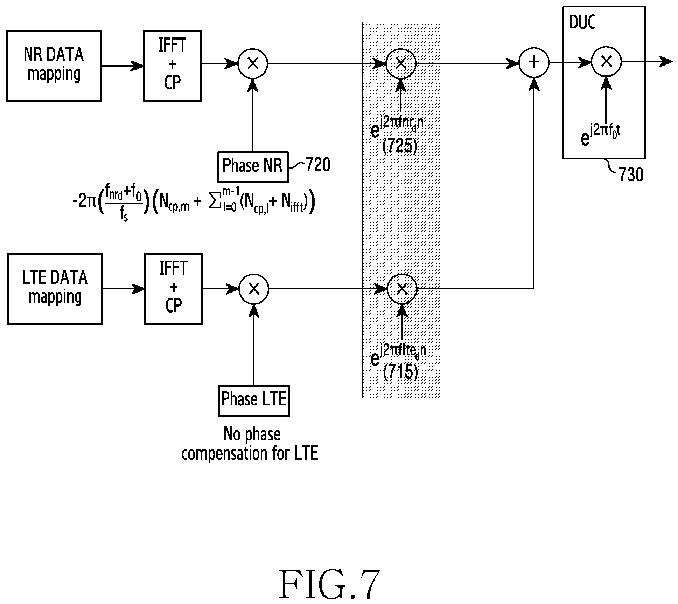

FIG. 7 illustrates another example of a frequency shifter in a DSS environment of an LTE communication system and an NR communication system according to an embodiment of the disclosure. FIG. 7 describes phase compensation performed separately after IFFT and CP insertion are applied to the NR signal and the LTE signal, respectively. This DSS operation may be referred to as DSS configuration type 2.

Referring to FIG. 7, the base station may include a frequency shifter for frequency shifting to BWP. According to an embodiment, the frequency shifter may be implemented to have a continuous phase (hereinafter referred to as frequency shifter type B). When this type of frequency shifter is implemented as a system, LTE phase compensation 710 may not be performed. NR phase compensation 720 may be determined based on the following equations. The phase compensation may be performed in symbol-by symbol units.

$$\beta_m = e^{-j2\pi(f_0 + f_{nr_d})(N_{cp,m} + \sum_{l=0}^{m-1}(N_{cp,l} + N_{ifft}))T_s} \qquad \ldots \text{Equation 15}$$

Here, $f_{nr_d} = f_{nr_b} - f_0$, $f_0$ represents an up-conversion center frequency, and $f_{nr_b}$ represents an NR BWP center frequency, respectively. In this case, according to an embodiment, if $f_{nr_b}$ and $f_0$ are the same, $f_{nr_d} = 0$ and if $\beta_m$ is

$$\beta_m = e^{-j2\pi f_{nr_b}(N_{cp,m} + \sum_{l=0}^{m-1}(N_{cp,l} + N_{ifft}))T_s}$$

summarized in the form of , this may be the same as the phase compensation of Equation 2 of the NR standard.

The frequency shifter processing NR and LTE signals transits $f_{nr_b}$ to $f_0$ and $f_{lte_b}$ to $f_0$. According to an embodiment, the NR BWP and the LTE BW may be configured to have different numerology. For example, the NR BWP may be 30 kHz, and the LTE BW may be 15 kHz. In addition, as an example, the NR BWP may be 120 kHz, and the LTE BW may be 15 kHz. In order to aggregate the two signals in the time domain, frequency shifting may be performed. A value of the frequency shifting 715 for the LTE signal and a value of the frequency shifting 725 for the NR signal may be determined based on the following equations.

$$x = e^{j2\pi f_{nr_d}} \qquad \ldots \text{Equation 16}$$

$$y = e^{j2\pi f_{lte_d}} \qquad \ldots \text{Equation 17}$$

Thereafter, the RU may perform up-conversion 730 based on fa, which is the center frequency of the up-conversion. The up-conversion is performed at DUC.

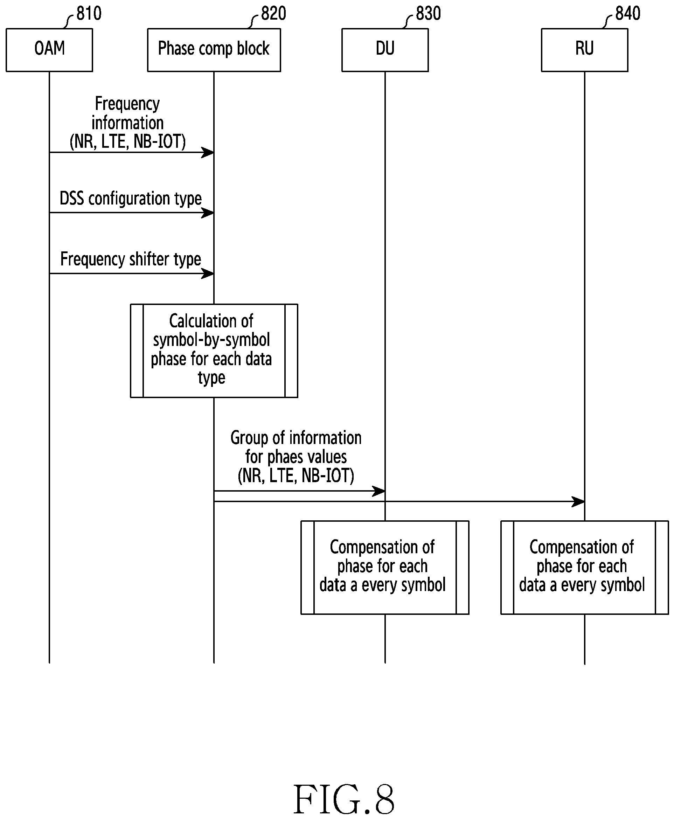

FIG. 8 illustrates an example of a functional block for phase compensation according to an embodiment of the disclosure. Each of the operation administration and maintenance (OAM) block and the phase compensation block illustrated in FIG. 8 may be implemented inside the base station or as a separate device (e.g., a server) outside the base station. In other words, the OAM block and the phase compensation block refer to functional configurations for performing functions to be described later, and the illustration of FIG. 8 is not construed as limiting an implementation method of an entity performing the corresponding functions.

Referring to FIG. 8, an operation administration and maintenance (OAM) block 810 may transmit frequency information to the phase compensation block 820. The frequency information refers to frequency information of a bandwidth or BWP of a cell. The frequency information may include information indicating a carrier frequency corresponding to the center frequency in the frequency domain. The frequency information may include frequency information of NR, LTE, or NB-IOT data. For example, the frequency information may include an Evolved Universal Mobile Telecommunications System (UMTS) Terrestrial Radio Access (EUTRA) absolute radio frequency channel number (EARFCN) of LTE and NB-IOT data. In addition, for example, the frequency information may include an NR-absolute radio frequency channel number (NR-ARFCN) of NR data. In some embodiments, the frequency information may further include SCS numerology. The frequency information may be directly composed of center frequency information (e.g., $f_{lte}$, $f_{nbiot}$, $f_{nr}$

(Hz)) for each data or may be composed of information (e.g., $\frac{f_{lte}}{f_s}$, $\frac{f_{nbiot}}{f_s}$, $\frac{f_{nr}}{f_s}$ ) normalized according to a sampling rate ($f_s$ (Hz)) used by the system.

According to an embodiment, the OAM block 810 may transmit DSS configuration type information (e.g., DSS configuration types 1 and 2) and frequency shifter type information (e.g., frequency shifter types A and B) for calculating a phase composition value to the phase compensation block 820 in addition to the frequency information. In addition, according to an embodiment, in addition to DSS configuration type information or frequency shifter type information, DU-RU implementation information, DU capability information (type of function split (e.g., function split in Fig. 2), whether or not a frequency shifter is implemented, and type of frequency shifter), or RU capability information (type of function split (e.g., function split in Fig. 2), whether or not a frequency shifter is implemented, and type of frequency shifter) may be transmitted.

The phase compensation block 820 may calculate a phase compensation value. The phase compensation value may be calculated based on at least one of Equations 1 to 17 described above. The calculated information may transmit a phase compensation value according to a symbol unit or a repetition period defined in Table 1 to at least one of the DU and the RU. The DU 830 may be a DU for an LTE cell. For example, the DU 830 may be an eNB DU. The DU 830 may be a DU for an NR cell. For example, the DU 830 may be a gNB DU. The DU 830 or the RU 840 may perform phase compensation by applying the received phase compensation value. In FIG. 8, it has been described that the phase compensation block 820 transmits the phase compensation value to each of the DU 830 and the RU 840, but this is only an example of a transmission process. According to an embodiment, the phase compensation block 820 may transmit phase compensation information to the DU 830, and the DU 830 may transmit the phase compensation information to the RU 840 through a fronthaul interface.

FIG. 8 is only a functional configuration for determining a phase compensation value, and the actual operation of the network entity may vary according to specific circumstances. First, embodiments of the disclosure may be performed by a management device that determines which phase value to apply. Here, the management device refers to a network node in which the phase compensation block 820 of FIG. 8 is implemented. The management device according to embodiments of the disclosure may identify a DSS environment. The management device may identify that the frequency domain of the LTE cell and the frequency domain of the NR cell are shared. In this case, the management device may identify that the DU for LTE and the DU for NR are connected to one RU as an arrangement of the base station. When the management device identifies that two DUs are connected to the DSS and one RU, the management device may determine configuration information for phase compensation. This is because one RU supports signals of different RATs, and phase values applied to standards are different between LTE and NR signals during up-conversion. The management device may identify that phase compensation is required for each of the LTE signal and the NR signal.

The management device may identify the arrangement shape of the DU and the RU to perform phase compensation. According to an embodiment, the management device may determine whether OFDM modulation is performed in common with LTE and NR or individually. OFDM modulation exemplifies IFFF, but inverse discrete Fourier transform (IDFT) may be used for high performance. According to an embodiment, the management device may determine a network entity in which phase compensation is performed. The network entity may be at least one of an LTE DU, an NR DU, and an RU.

The management device may determine configuration information for phase compensation based on whether OFDM modulation is commonly applied and a network entity on which phase compensation is performed. The configuration information may include a configuration for which phase compensation value to be applied to which network entity. The management device may generate configuration information for phase compensation based on a base station arrangement shape for DSS, frequency information (e.g., center frequency) of cells of each communication system, and frequency shifter information. The management device may transmit the generated configuration information to a corresponding network entity. Accordingly, the network entity may be configured to perform phase compensation with a set value. For example, as illustrated in FIG. 3, phase compensation may be individually performed in each DU. In addition, for example, as illustrated in FIG. 4, NR phase compensation may be performed in common, and LTE phase compensation may be performed only in LTE DU. The phase compensation arrangement of FIG. 4 may be applied to a situation in which an LTE DU is added to an NR base station arrangement (NR DU - NR RU). In addition, for example, as illustrated in FIG. 5, only NR phase compensation may be performed. The phase compensation arrangement of FIG. 5 may be applied to a situation in which an NR DU is added to an LTE base station arrangement (LTE DU - LTE RU). Because the DSS has a purpose of supporting a system supporting other RATs while minimizing additional communication facilities, the embodiments of FIGS. 4A, 4B, and 5 may be more usefully applied.

According to an embodiment, the management device may determine the phase compensation based on whether the frequency shifter is implemented and the type of the frequency shifter. The frequency shifter has a practical benefit when LTE bandwidth and NR BWP are independently configured and have different numerology. For uplink conversion of LTE signal and NR signal, frequency shifting for each signal is required. Based on the frequency shifting of each signal, a phase compensation value for each signal may be determined. Based on the frequency shifting of the LTE signal, a phase compensation value for the LTE signal may be determined. Based on the frequency shifting of the NR signal, a phase compensation value for the NR signal may be determined. In this case, the corresponding phase compensation value may vary depending on whether the frequency shifter has a zero phase or a continuous phase for each symbol.

Embodiments of the disclosure may be performed by the DU and RU themselves in addition to the management device. For example, it is assumed that a gNB DU is added to the LTE base station. The LTE base station may include an eNB DU and an RU. A gNB DU is added to the RU. Referring to FIG. 4 as an example, as illustrated in Equation 1, LTE does not require separate phase compensation. Therefore, a function for phase compensation may not be separately implemented in the LTE base station. Therefore, when the gNB DU is connected to the RU, it is required to solve the phase problem in the gNB DU. According to an embodiment, the gNB DU may identify that the gNB DU is connected to the RU of the LTE base station. The gNB DU may identify, based on the frequency information, that DSS is configured as data to be transmitted by the gNB DU and data of the LTE base station share the same frequency region. The gNB DU may apply phase compensation performed in the gNB DU based on LTE frequency information and symbol accumulation time (that is, a symbol interval in which phase compensation is performed). The LTE frequency information refers to the center frequency of an LTE cell sharing a frequency spectrum with an NR. For example, the phase compensation performed in the gNB DU may be determined based on Equation 10. Even in a situation (e.g., FIG. 4) in which the eNB DU is added to the NR base station, the operation of the eNB DU may be defined as described above.

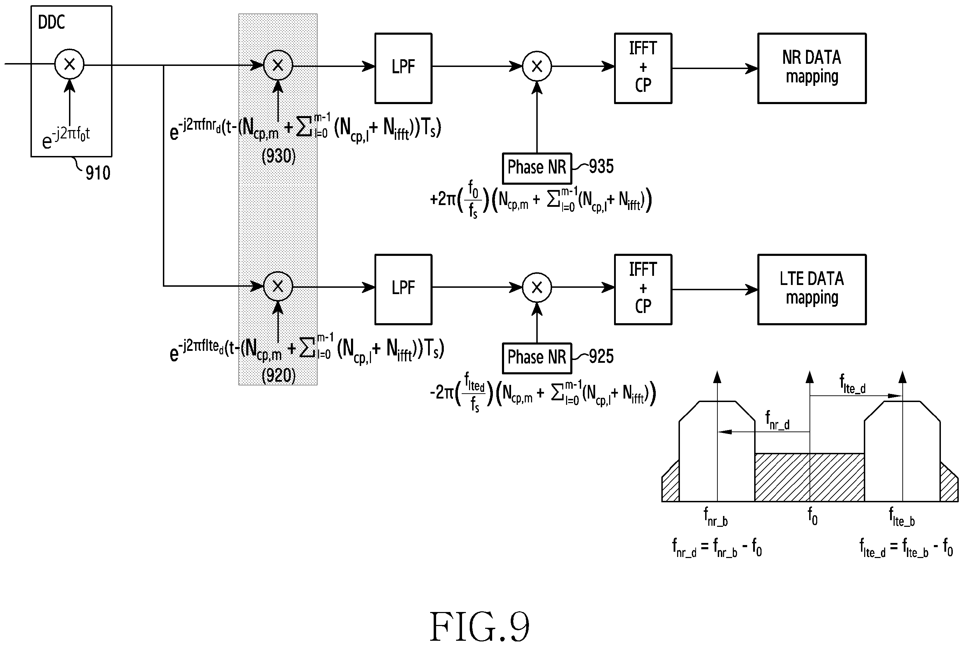

FIG. 9 illustrates an example of uplink phase compensation in a DSS environment of an LTE communication system and an NR communication system according to an embodiment of the disclosure. Phase compensation of the downlink signal of the DSS described with reference to FIGS. 3, 4A, 4B, and 5 to 8 may be performed in the same or similar manner for uplink.

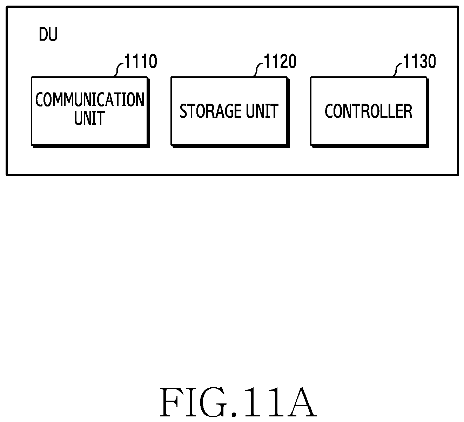

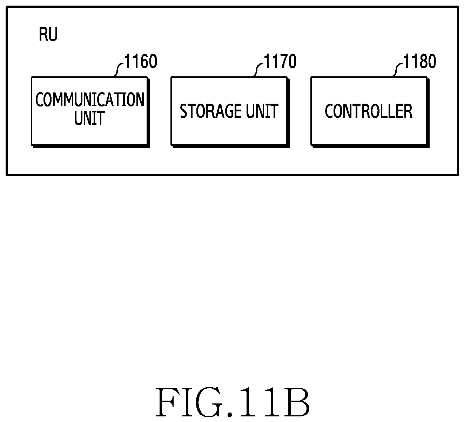

Referring to FIG. 9, a base station may receive an uplink signal from a terminal. The RU of the base station may receive the NR signal from the terminal of the NR cell. The RU of the base station may receive the LTE signal from the terminal of the LTE cell. According to the type of function split, the procedure illustrated in FIG. 9 may be performed in the RU or in the DU. Hereinafter, FIGS. 11A and 11B describe each operation based on the second function split 210, but this is only an example for convenience of description, and other function split may be applied to an uplink operation to be described later.

The RU may perform downlink conversion on the received signal through the digital downlink conversion (DDC) 910. The RU may perform frequency shifting to separate LTE data from NR data. The RU may perform frequency shifting on each of the center frequency of LTE and the BWP center frequency of NR before performing low pass filtering (LPF). The RU may perform frequency shifting 920 for the LTE signal. The RU may perform frequency shifting 930 for the NR signal. The RU may perform phase compensation 925 on the filtered LTE signal. The RU may perform phase compensation 935 on the filtered NR signal. In this case, the equations of LTE (or NB-IOT) phase $\alpha_m$ and NR phase $\beta_m$ are as follows.

$$\alpha_m = e^{-j2\pi f_{lte_d}\left(N_{cp,m}+\sum_{l=0}^{m-1}(N_{cp,l}+N_{ifft})\right)T_s} \qquad \text{... Equation 18}$$

$$\beta_m = e^{+j2\pi f_0\left(N_{cp,m}+\sum_{l=0}^{m-1}(N_{cp,l}+N_{ifft})\right)T_s} \qquad \text{... Equation 19}$$

Comparing Equations 18 and 19 with Equations 11 and 12, respectively, it is identified that there is a 180 degree phase difference between the downlink phase compensation value and the uplink phase compensation value.

Thereafter, the RU may transmit each data to the corresponding DU through CP removal and FFT from each of the LTE signal and the NR signal. For example, the RU may transmit LTE data to the eNB DU, which is the LTE DU. In addition, for example, the RU may transmit NR data to the gNB DU, which is the NR DU. Operations performed by the RU are examples according to the second function split 210, and when other function split is applied, CP removal and FFT may be performed by the DU other than the RU. For example, in the case of the first function split 205, from CP removal and FFT operations, operations may be performed by individual DUs.

Embodiments of the disclosure propose phase compensation operations according to the separation shape of the DU-RU. In the open-radio access network (O-RAN) 3.0 standard for these interfaces between DU and RU, it is standardized to transfer data by designating separate sections for each NR and LTE. In addition, it is specified to perform phase compensation for NR data. Accordingly, according to an embodiment, the DU-RU message defined in the O-RAN standard may be used for phase compensation for NR-LTE DSS in the DSS configuration type 2 shape (e.g., FIGS. 6 and 7). Depending on whether the frequency shifter type is A or B, the RU may adaptively perform phase compensation.

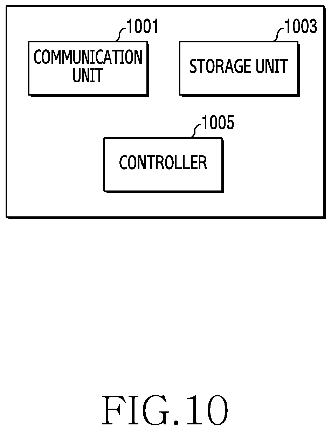

FIG. 10 illustrates a functional configuration of a management device according to an embodiment of the disclosure. The management device may determine phase compensation values according to the DU and RU arrangements described with reference to FIGS. 3, 4A, 4B, and 5 to 9. According to an embodiment, the management device may be a network device in which the phase compensation block 820 of FIG. 8 is implemented. Terms such as "...unit" and "-er" used below refer to units that process at least one function or operation, and may be implemented by hardware, software, or a combination of hardware and software.

Referring to FIG. 10, a management device may include a communication unit 1001, a storage unit 1003, and a controller 1005. The management device may include the communication unit 1001 to communicate with other nodes (e.g., DU and RU). According to an embodiment, the management device may be a device configured separately from the base station. For example, the management device may be a server. As another example, the management device may be another DU adjacent to the DU to be controlled. According to another embodiment, the management device may be a device included in the base station. For example, the management device may be configured as a higher network entity (e.g., CU) of the DU. As another example, the management device may be implemented within the corresponding DU.

The communication unit 1001 may perform functions for transmitting and receiving information. Specifically, the communication unit 1001 may provide an interface for performing communication with other nodes in the network. That is, the communication unit 1001 converts a bit string transmitted from an operating device to another node, for example, a server, a sensor device, a higher network node, etc. into a physical signal, and converts a physical signal received from the base station into a bit string.

The communication unit 1001 may perform functions for transmitting and receiving signals in a wired communication environment. The communication unit 1001 may include a wired interface for controlling direct connection between devices through a transmission medium (e.g., copper wire and optical fiber). For example, the communication unit 1001 may transmit an electrical signal to another device through a copper wire or perform conversion between the electrical signal and the optical signal. The communication unit 1001 may perform functions for transmitting and receiving signals in a wireless communication environment. For example, the communication unit 1001 may perform a conversion function between a baseband signal and a bit string according to a physical layer standard of a system. In addition, the communication unit 1001 may include a plurality of transmission/reception paths.

The communication unit 1001 transmits and receives signals as described above. Accordingly, the communication unit 1001 may be referred to as a 'transmission unit', a 'reception unit', or a 'transmission/reception unit'. In addition, in the following description, transmission and reception are used as a meaning including that the above-described processing is performed by the communication unit 1001. According to various embodiments, the communication unit 1001 may transmit configuration information for phase compensation to the DU or RU of the base station. The configuration information may include a phase compensation value to be applied at each network node. The network node may be a DU for LTE, a DU for NR, or an RU in the DSS.

The storage unit 1003 stores data such as a basic program, an application program, and configuration information for the operation of the operating device. The storage unit 1003 may be configured as a volatile memory, a nonvolatile memory, or a combination of a volatile memory and a nonvolatile memory. In addition, the storage unit 1003 provides stored data according to a request by the controller 1005.

The controller 1005 controls overall operations of the operating device. For example, the controller 1005 transmits and receives signals through the communication unit 1001. In addition, the controller 1005 writes and reads data in the storage unit 1003. To this end, the controller 1005 may include at least one processor. According to various embodiments, the controller 1005 may include a DSS determination unit that determines whether a DSS is configured, a DSS type determination unit (DSS configuration type 1 and 2) identifying the arrangement of the LTE base station and the NR base station for the DSS, a frequency shifter, frequency information of each communication system, an information obtaining unit for obtaining information on other network entities (DU or RU), and a configuration information generation unit for phase compensation. These functional components are command sets or codes stored in the storage unit 1003, and may be a command/code that is at least temporarily resided in the controller 1005, a storage space in which the command/code are stored, or a part of circuitry constituting the controller 1005. According to various embodiments, the controller 1005 may control the operating device to perform operations according to various embodiments to be described later.

FIG. 11A illustrates a functional configuration of a digital unit (DU) according to an embodiment of the disclosure. Terms such as "...unit" and "-er" used below refer to units that process at least one function or operation, and may be implemented by hardware, software, or a combination of hardware and software.

Referring to FIG. 11A, a DU includes a communication unit 1110, a storage unit 1120, and a controller 1130.

The communication unit 1110 may perform functions for transmitting and receiving signals in a wired communication environment. The communication unit 1110 may include a wired interface for controlling direct connection between devices through a transmission medium (e.g., copper wire and optical fiber). For example, the communication unit 1110 may transmit an electrical signal to another device through a copper wire or perform conversion between the electrical signal and the optical signal. The communication unit 1110 may be connected to a radio unit (RU). The communication unit 1110 may be connected to a core network or to a CU of a distributed arrangement.

The communication unit 1110 may perform functions for transmitting and receiving signals in a wireless communication environment. For example, the communication unit 1110 may perform a conversion function between a baseband signal and a bit string according to a physical layer standard of a system. For example, when transmitting data, the communication unit 1110 generates complex symbols by encoding and modulating a transmission bit string. In addition, when receiving data, the communication unit 1110 restores the received bit string through demodulation and decoding of the baseband signal. In addition, the communication unit 1110 may include a plurality of transmission/reception paths. In addition, according to an embodiment, the communication unit 1110 may be connected to a core network or may be connected to other nodes (e.g., integrated access backhaul (IAB)).

The communication unit 1110 may transmit and receive signals. To this end, the communication unit 1110 may include at least one transceiver. For example, the communication unit 1110 may transmit a synchronization signal, a reference signal, system information, a message, a control message, a stream, control information, or data. In addition, the communication unit 1110 may perform beamforming.

The communication unit 1110 transmits and receives signals as described above. Accordingly, all or part of the communication unit 1110 may be referred to as a 'transmission unit', a 'reception unit', or a 'transmission/reception unit'. In addition, in the following description, transmission and reception performed through a wireless channel are used as a meaning including that the above-described processing is performed by the communication unit 1110.

Although not illustrated in FIG. 11A, the communication unit 1110 may further include a backhaul communication unit for connecting to a core network, another base station, or a CU. The backhaul communication unit provides an interface for communicating with other nodes in the network. That is, the backhaul communication unit converts a bit string transmitted from a base station to another node, for example, another access node, another base station, a higher node, a core network, etc. into a physical signal, and converts a physical signal received from another node into a bit string.

The storage unit 1120 stores data such as a basic program, an application program, and configuration information for the operation of the DU. The storage unit 1120 may include a memory. The storage unit 1120 may be configured as a volatile memory, a nonvolatile memory, or a combination of a volatile memory and a nonvolatile memory. In addition, the storage unit 1120 provides stored data according to a request by the controller 1130.

The controller 1130 controls overall operations of the DU. For example, the controller 1130 transmits and receives signals through the communication unit 1110 (or through the backhaul communication unit). In addition, the controller 1130 writes and reads data in the storage unit 1120. In addition, the controller 1130 may perform functions of a protocol stack required by the communication standard. To this end, the controller 1130 may include at least one processor. According to various embodiments, the controller 1130 may control the DU to perform operations according to various embodiments.

The configuration of the DU illustrated in FIG. 11A is only an example, and an example of a DU performing various embodiments of the disclosure is not limited from the configuration illustrated in FIG. 11A. According to various embodiments, some configurations may be added, deleted, or changed.

FIG. 11B illustrates a functional configuration of a radio unit (RU) according to an embodiment of the disclosure. Terms such as "...unit" and "-er" used below refer to units that process at least one function or operation, and may be implemented by hardware, software, or a combination of hardware and software.

Referring to FIG. 11B, a RU 180 includes a communication unit 1160, a storage unit 1170, and a controller 1180.

The communication unit 1160 performs functions for transmitting and receiving signals through a wireless channel. For example, the communication unit 1160 up-converts the baseband signal into an RF band signal, transmits the RF band signal through an antenna, and down-converts the RF band signal received through the antenna into a baseband signal. For example, the communication unit 1160 may include a transmission filter, a reception filter, an amplifier, a mixer, an oscillator, a digital to analog converter (DAC), an analog to digital converter (ADC), and the like.

In addition, the communication unit 1160 may include a plurality of transmission/reception paths. Furthermore, the communication unit 1160 may include an antenna unit. The communication unit 1160 may include at least one antenna array composed of a plurality of antenna elements. In terms of hardware, the communication unit 1160 may include a digital circuit and an analog circuit (e.g., a radio frequency integrated circuit (RFIC)). Here, the digital circuit and the analog circuit may be implemented as a single package. In addition, the communication unit 1160 may include a plurality of RF chains. The communication unit 1160 may perform beamforming. The communication unit 1160 may apply a beamforming weight to the signal to be transmitted and received in order to give a directionality according to the configuration of the controller 1180. According to an embodiment, the communication unit 1160 may include a radio frequency (RF) block (or an RF unit).

In addition, the communication unit 1160 may transmit and receive signals. To this end, the communication unit 1160 may include at least one transceiver. The communication unit 1160 may transmit a downlink signal. The downlink signal may include a synchronization signal (SS), a reference signal (RS) (e.g., cell-specific reference signal (CRS) and demodulation (DM)-RS), system information (e.g., master information block (MIB), system information block (SIB), remaining system information (RMSI), and other system information (OSI)), a configuration message, control information, downlink data, etc. In addition, the communication unit 1160 may receive an uplink signal. The uplink signal may include a random access related signal (e.g., random access preamble (RAP) (or message 1 (Msg1) and message 3 (Msg3)), a reference signal (e.g., sounding reference signal (SRS) and DM-RS), a power headroom report (PHR), etc.).

The communication unit 1160 transmits and receives signals as described above. Accordingly, all or part of the communication unit 1160 may be referred to as a 'transmission unit', a 'reception unit', or a 'transmission/reception unit'. In addition, in the following description, transmission and reception performed through a wireless channel are used as a meaning including that the above-described processing is performed by the communication unit 1160.

The storage unit 1170 stores data such as a basic program, an application program, and configuration information for the operation of the RU. The storage unit 1170 may be configured as a volatile memory, a nonvolatile memory, or a combination of a volatile memory and a nonvolatile memory. In addition, the storage unit 1170 provides stored data according to a request by the controller 1180. According to an embodiment, the storage unit 1170 may include a memory for a condition, command, or setting value related to the SRS transmission method.

The controller 1180 controls overall operations of the RU. For example, the controller 1180 transmits and receives signals through the communication unit 1160. In addition, the controller 1180 writes and reads data in the storage unit 1170. In addition, the controller 1180 may perform functions of a protocol stack required by the communication standard. To this end, the controller 1180 may include at least one processor. According to various embodiments, the controller 1180 may control the RU to perform operations according to various embodiments.

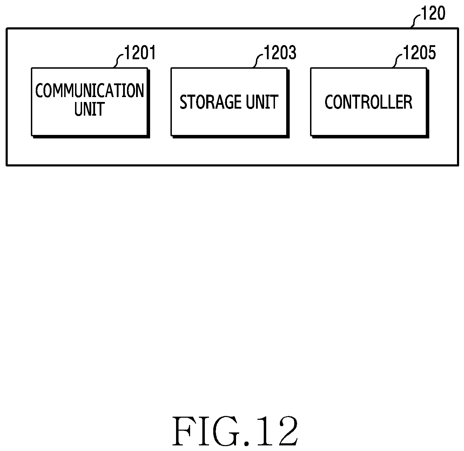

FIG. 12 illustrates a functional configuration of a terminal according to an embodiment of the disclosure. Terms such as "...unit" and "-er" used below refer to units that process at least one function or operation, and may be implemented by hardware, software, or a combination of hardware and software.

Referring to FIG. 12, a terminal includes a communication unit 1201, a storage unit 1203, and a controller 1205.

The communication unit 1201 may perform functions for transmitting and receiving signals through a wireless channel. For example, the communication unit 1201 may perform a conversion function between a baseband signal and a bit string according to a physical layer standard of a system. For example, when transmitting data, the communication unit 1201 generates complex symbols by encoding and modulating a transmission bit string. In addition, when receiving data, the communication unit 1201 restores the received bit string through demodulation and decoding of the baseband signal. In addition, the communication unit 1201 up-converts the baseband signal into an RF band signal, transmits the RF band signal through an antenna, and down-converts the RF band signal received through the antenna into a baseband signal. For example, the communication unit 201 may include a transmission filter, a reception filter, an amplifier, a mixer, an oscillator, a DAC, an ADC, and the like.

In addition, the communication unit 1201 may include a plurality of transmission/reception paths. Furthermore, the communication unit 1201 may include an antenna unit. The communication unit 1201 may include at least one antenna array composed of a plurality of antenna elements. In terms of hardware, the communication unit 1201 may include a digital circuit and an analog circuit (e.g., a radio frequency integrated circuit (RFIC)). Here, the digital circuit and the analog circuit may be implemented as a single package. In addition, the communication unit 1201 may include a plurality of RF chains. The communication unit 1201 may perform beamforming. The communication unit 1201 may apply a beamforming weight to the signal to be transmitted and received in order to give a directionality according to the configuration of the controller 1205.

In addition, the communication unit 1201 may transmit and receive signals. To this end, the communication unit 1201 may include at least one transceiver. The communication unit 1201 may receive a downlink signal. The downlink signal may include a synchronization signal (SS), a reference signal (RS) (e.g., cell-specific reference signal (CRS) demodulation (DM)-RS), system information (e.g., MIB, SIB, remaining system information (RMSI), and other system information (OSI)), a configuration message, control information, downlink data, etc. In addition, the communication unit 1201 may transmit an uplink signal. The uplink signal may include a random access related signal (e.g., random access preamble (RAP) (or Msg1 and Msg3), a reference signal (e.g., sounding reference signal (SRS) and DM-RS), a buffer status report (BSR), etc.).

Specifically, the communication unit 1201 may include an RF processing unit and a baseband processing unit. The RF processing unit performs a function for transmitting and receiving a signal through a wireless channel, such as band conversion and amplification of the signal. That is, the RF processing unit up-converts the baseband signal provided from the baseband processing unit into an RF band signal, transmits the RF band signal through the antenna, and down-converts the RF band signal received through the antenna into a baseband signal. For example, the RF processing unit may include a transmit filter, a reception filter, an amplifier, a mixer, an oscillator, a digital to analog converter (DAC), an analog to digital converter (ADC), and the like. In addition, the RF processing unit may include a plurality of RF chains. Furthermore, the RF processing unit may perform beamforming. For the beamforming, the RF processing unit may adjust the phase and magnitude of each of the signals transmitted and received through a plurality of antennas or antenna elements.

The baseband processing unit performs a conversion function between the baseband signal and the bit string according to the physical layer standard of the system. For example, when transmitting data, the baseband processing unit generates complex symbols by encoding and modulating a transmission bit string. In addition, when receiving data, the baseband processing unit restores a received bit string by demodulating and decoding the baseband signal provided from the RF processing unit. For example, in accordance with the orthogonal frequency-division multiplexing (OFDM) method, when transmitting data, the baseband processing unit generates complex symbols by encoding and modulating a transmitted bit string, maps the complex symbols to subcarriers, and then configures OFDM symbols through inverse fast Fourier transform (IFFT) operation and cyclic prefix (CP) insertion. In addition, when receiving data, the baseband processing unit divides the baseband signal provided from the RF processing unit into OFDM symbol units, restores signals mapped to subcarriers through the fast Fourier transform (FFT) operation, and then restores a received bit string through demodulation and decoding.

The communication unit 1201 transmits and receives signals as described above. Accordingly, all or part of the communication unit 1201 may be referred to as a transmission unit, a reception unit, or a transmission/reception unit. Furthermore, the communication unit 1201 may include a plurality of communication modules to support a plurality of different wireless access technologies. In addition, the communication unit 1201 may include different communication modules to process signals in different frequency bands. For example, the different radio access technologies may include wireless local area network (LAN) (e.g., IEEE 802.1x), cellular networks (e.g., LTE and NR), and the like. In addition, the different frequency bands may include a super high frequency (SHF) (e.g., 2.5 GHz, 5 GHz) band and a millimeter wave (e.g., 60 GHz) band. In addition, the communication unit 1201 may use the same radio access technology on different frequency bands (e.g., unlicensed band for licensed assisted access (LAA), a citizens broadband radio service (CBRS) (e.g., 3.5 GHz)).

The storage unit 1203 stores data such as a basic program, an application program, and configuration information for the operation of the terminal. The storage unit 1203 may be configured as a volatile memory, a nonvolatile memory, or a combination of a volatile memory and a nonvolatile memory. The storage unit 1203 stores data such as a basic program, an application program, and configuration information for the operation of the terminal.

The controller 1205 controls overall operations of the terminal. For example, the controller 1205 transmits and receives signals through the communication unit 1201. In addition, the controller 1205 writes and reads data in the storage unit 1203. In addition, the controller 1205 may perform functions of a protocol stack required by the communication standard. To this end, the controller 1205 may include at least one processor. The controller 1205 may include at least one processor or a microprocessor, or may be a part of the processor. In addition, a part of the communication unit 1201 and the controller 1205 may be referred to as a CP. The controller 1205 may include various modules for performing communication. According to various embodiments, the controller 1205 may control the terminal to perform operations according to various embodiments. For example, the controller 905 may control at least one transceiver to transmit or receive an LTE signal, an NB-IoT signal, or an NR signal with the base station (or RU).

In the disclosure, the base station has been described as a structure in which one entity or DU-RU is separated, but as described above, embodiments of the disclosure are not limited thereto. The base station according to various embodiments of the disclosure may be implemented to form an access network having a distributed deployment as well as an integrated deployment (e.g., eNB of LTE). In addition, the base station may be divided into a central unit (CU) and a digital unit (DU), so that the CU may perform upper layer functions (e.g., packet data conversion protocol (PDCP) and RRC) and the DU may perform lower layer functions (e.g., medium access control (MAC) and physical layer (PHY)).

In this way, the base station having the distributed deployment may further include a configuration for fronthaul interface communication. According to an embodiment, the base station, as a DU, may perform functions for transmitting and receiving signals in a wired communication environment. The DU may include a wired interface for controlling direct connection between devices through a transmission medium (e.g., copper wire and optical fiber). For example, the DU may transmit an electrical signal to another device through a copper wire or perform conversion between the electrical signal and the optical signal. The DU may be connected to a CU of a distributed deployment. However, this description is not interpreted as excluding the scenario in which the DU is connected to the CU through a wireless network. In addition, the DU may be additionally connected to a radio unit (RU). However, this description is not interpreted as excluding a wireless environment consisting only of CU and DU.

According to an embodiment, the phase correction apparatus is configured to separately apply phase correction to NR, LTE, and NB-IOT data paths when NR-LTE DSS is applied. According to an embodiment, the phase correction apparatus may determine the phase value so that the applied phase value is applied differently according to the NR-LTE DSS implementation shape structure. The phase correction apparatus may perform phase value calculation for each shape (e.g., Equations 1 to 19). According to an embodiment, the phase correction apparatus may transmit configuration information for phase compensation of a corresponding entity to at least one of LTE DU, NR DU, or RU for each shape.

According to various embodiments of the disclosure, a method performed by a management device in a wireless communication system may include, based on dynamic spectrum sharing (DSS) for a first communication system and a second communication system, a process of identifying that a first digital unit (DU) for the first communication system and a second DU for the second communication system are related to one radio unit (RU) for up-conversion, based on whether orthogonal frequency-division multiplexing (OFDM) modulation is performed commonly or individually on a first signal of the first communication system and a second signal of the second communication system, and at least one network entity in which phase compensation for the DSS is performed, a process of obtaining configuration information for the phase compensation, and a process of transmitting the configuration information to the at least one network entity, wherein the at least one network entity may include at least one of the first DU, the second DU, or the RU.

According to an embodiment, the OFDM modulation may include an inverse fast Fourier transform (IFFT) or an inverse discrete Fourier transform (IDFT), the first communication system may include long-term evolution (LTE), and the second communication system may include new radio (NR).

According to an embodiment, when the OFDM modulation is performed in common to the first signal and the second signal, and the phase compensation is performed in the first DU and the second DU, the phase configuration information may include first phase compensation information in the first DU and second phase compensation information in the second DU, the first phase compensation information may be determined based on the difference between the center frequency of a cell of the first signal and the center frequency of a bandwidth part (BWP) of the second signal, and the second phase compensation information may be determined based on the center frequency of the BWP of the second signal.

According to an embodiment, the first phase compensation information may be determined based on the following equation,

$$\alpha_m = e^{+j2\pi f_d\left(N_{cp,m}+\sum_{l=0}^{m-1}\left(N_{cp,l}+N_{ifft}\right)\right)T_s}$$

the second phase compensation information may be determined based on the following equation,

$$\beta_m = e^{-j2\pi f_{nr}\left(N_{cp,m}+\sum_{l=0}^{m-1}\left(N_{cp,l}+N_{ifft}\right)\right)T_s}$$

here, $f_d$ is the difference between the center frequency of the cell of the first signal and the center frequency of the bandwidth part (BWP) of the second signal, $f_{nr}$ is the center frequency of the BWP of the second signal, and $(N_{cp,m} + \sum_{l=0}^{m-1}\left(N_{cp,l} + N_{ifft}\right))T_s$ is a symbol accumulation time.

According to an embodiment, when the OFDM modulation is performed in common to the first signal and the second signal, and the phase compensation is performed in the first DU and the RU, the phase configuration information may include first phase compensation information in the first DU and second phase compensation information in the RU, the first phase compensation information may be determined based on the center frequency of a cell of the first signal, and the second phase compensation information may be determined based on the center frequency of the BWP of the second signal.

According to an embodiment, the first phase compensation information is determined based on the following equation,

$$\alpha_m = e^{+j2\pi f_{lte}\left(N_{cp,m}+\sum_{l=0}^{m-1}\left(N_{cp,l}+N_{ifft}\right)\right)T_s}$$

the second phase compensation information is determined based on the following equation,

$$\beta_m = e^{-j2\pi f_{nr}\left(N_{cp,m}+\sum_{l=0}^{m-1}\left(N_{cp,l}+N_{ifft}\right)\right)T_s}$$

here, $f_{lte}$ is the center frequency of the cell of the first signal, $f_{nr}$ is the center frequency of the BWP of the second signal, and $\left(N_{cp,m} + \sum_{l=0}^{m-1}\left(N_{cp,l} + N_{ifft}\right)\right)T_s$ is a symbol accumulation time.

According to an embodiment, when the OFDM modulation is performed in common to the first signal and the second signal, and the phase compensation is performed in the second DU, the phase configuration information may include phase compensation information in the second DU, and the phase compensation information in the second DU may be determined based on the center frequency of a cell of the first signal.

According to an embodiment, the phase compensation information in the second DU is determined based on the following equation,

$$\beta_m = e^{-j2\pi f_{lte}\left(N_{cp,m}+\sum_{l=0}^{m-1}\left(N_{cp,l}+N_{ifft}\right)\right)T_s}$$

here, $f_{lte}$ is the center frequency of the cell of the first signal, and $\left(N_{cp,m} + \sum_{l=0}^{m-1}\left(N_{cp,l} + N_{ifft}\right)\right)T_s$ is a symbol accumulation time.

According to an embodiment, the method further includes a process of obtaining information on a frequency shifter for frequency mapping of each of the bandwidth of the first signal and the bandwidth part (BWP) of the second signal, and when the OFDM modulation is individually performed on each of the first signal and the second signal, and the frequency shifter has a zero-phase for each symbol, the phase configuration information may include first phase compensation information in the first DU and second phase compensation information in the RU, the first phase compensation information may be determined based on the difference between the center frequency of a cell of the first signal and the center frequency of the up-conversion, and the second phase compensation information may be determined based on the center frequency of the up-conversion.

According to an embodiment, the first phase compensation information is determined based on the following equation,

$$\alpha_m = e^{+j2\pi f_{lte_d}\left(N_{cp,m}+\sum_{l=0}^{m-1}(N_{cp,l}+N_{ifft})\right)T_s}$$

the second phase compensation information is determined based on the following equation,

$$\beta_m = e^{-j2\pi f_0\left(N_{cp,m}+\sum_{l=0}^{m-1}(N_{cp,l}+N_{ifft})\right)T_s}$$

here, $f_{lte_d}$ is the difference between the center frequency of the cell of the first signal and the center frequency of the up-conversion, $f_0$ is the center frequency of the up-conversion, and $\left(N_{cp,m} + \sum_{l=0}^{m-1}(N_{cp,l} + N_{ifft})\right)T_s$ is a symbol accumulation time.

According to an embodiment, the method further includes a process of obtaining information on a frequency shifter for frequency mapping of each of the bandwidth of the first signal and the bandwidth part (BWP) of the second signal, and when the OFDM modulation is individually performed on each of the first signal and the second signal, and the frequency shifter supports a continuous phase, the phase configuration information may include phase compensation information in the second DU, and the phase compensation information in the second DU may be determined based on the center frequency of the cell of the second signal.

According to an embodiment, the phase compensation information in the second DU is determined based on the following equation,

$$\beta_m = e^{-j2\pi(f_0+f_{nr_d})\left(N_{cp,m}+\sum_{l=0}^{m-1}(N_{cp,l}+N_{ifft})\right)T_s}$$

here, $f_{nr_d}$ is the difference between the center frequency of the cell of the second signal and the center frequency of the up-conversion, $f_0$ is the center frequency of the up-conversion, and $\left(N_{cp,m} + \sum_{l=0}^{m-1}(N_{cp,l} + N_{ifft})\right)T_s$ is a symbol accumulation time.

According to various embodiments of the disclosure, a method performed by a digital unit (DU) for a new radio (NR) communication system in a wireless communication system may include, in dynamic spectrum sharing (DSS) for a long-term evolution (LTE) communication system and the NR communication system, a process of obtaining center frequency information of the long-term evolution (LTE) communication system, a process of performing phase compensation for up-conversion of the DSS based on the center frequency information, and a process of transmitting the signal on which the phase compensation is performed to a radio unit (RU), and the RU may be related to a DU for the NR communication system and a DU for the LTE communication system.

According to an embodiment, the phase compensation is determined based on the following equation,

$$\beta_m = e^{-j2\pi f_{lte}\left(N_{cp,m}+\sum_{l=0}^{m-1}(N_{cp,l}+N_{ifft})\right)T_s}$$

here, $f_{lte}$ is obtained by the center frequency information of the LTE communication system, and $\left(N_{cp,m} + \sum_{l=0}^{m-1}(N_{cp,l} + N_{ifft})\right)T_s$ is a symbol accumulation time.

According to various embodiments of the disclosure, a management device in a wireless communication system may include at least one transceiver and at least one processor, and the at least one processor is configured to, based on dynamic spectrum sharing (DSS) for a first communication system and a second communication system, identify that a first digital unit (DU) for the first communication system and a second DU for the second communication system are related to one radio unit (RU) for up-conversion, based on whether orthogonal frequency-division multiplexing (OFDM) modulation is performed in common or individually on a first signal of the first communication system and a second signal of the second communication system, and at least one network entity in which phase compensation for the DSS is performed, obtain configuration information for the phase compensation, and transmit the configuration information to the at least one network entity, and the at least one network entity may include at least one of the first DU, the second DU, or the RU.

According to an embodiment, the OFDM modulation may include an inverse fast Fourier transform (IFFT) or an inverse discrete Fourier transform (IDFT), the first communication system may include long-term evolution (LTE), and the second communication system may include new radio (NR).

According to an embodiment, when the OFDM modulation is performed in common to the first signal and the second signal, and the phase compensation is performed in the first DU and the second DU, the phase configuration information may include first phase compensation information in the first DU and second phase compensation information in the second DU, the first phase compensation information may be determined based on the difference between the center frequency of a cell of the first signal and the center frequency of a bandwidth part (BWP) of the second signal, and the second phase compensation information may be determined based on the center frequency of the BWP of the second signal.

According to an embodiment, the first phase compensation information is determined based on the following equation,

$$\alpha_m = e^{+j2\pi f_d \left(N_{cp,m} + \sum_{l=0}^{m-1}\left(N_{cp,l} + N_{ifft}\right)\right)T_s}$$

the second phase compensation information is determined based on the following equation,

$$\beta_m = e^{-j2\pi f_{nr} \left(N_{cp,m} + \sum_{l=0}^{m-1}\left(N_{cp,l} + N_{ifft}\right)\right)T_s}$$

here, $f_d$ is the difference between the center frequency of the cell of the first signal and the center frequency of the bandwidth part (BWP) of the second signal, $f_{nr}$ is the center frequency of the BWP of the second signal, and ($N_{cp,m}$ +

$\sum_{l=0}^{m-1}\left(N_{cp,l} + N_{ifft}\right))T_s$ is a symbol accumulation time.

According to an embodiment, when the OFDM modulation is performed in common to the first signal and the second signal, and the phase compensation is performed in the first DU and the RU, the phase configuration information may include first phase compensation information in the first DU and second phase compensation information in the RU, the first phase compensation information may be determined based on the center frequency of a cell of the first signal, and the second phase compensation information may be determined based on the center frequency of the BWP of the second signal.

According to an embodiment, the first phase compensation information is determined based on the following equation,

$$\alpha_m = e^{+j2\pi f_{lte} \left(N_{cp,m} + \sum_{l=0}^{m-1}\left(N_{cp,l} + N_{ifft}\right)\right)T_s}$$

the second phase compensation information is determined based on the following equation,

$$\beta_m = e^{-j2\pi f_{nr} \left(N_{cp,m} + \sum_{l=0}^{m-1}\left(N_{cp,l} + N_{ifft}\right)\right)T_s}$$

here, $f_{lte}$ is the center frequency of the cell of the first signal, $f_{nr}$ is the center frequency of the BWP of the second signal, and $\left(N_{cp,m} + \sum_{l=0}^{m-1}\left(N_{cp,l} + N_{ifft}\right)\right)T_s$ is a symbol accumulation time.

According to an embodiment, when the OFDM modulation is performed in common to the first signal and the second signal, and the phase compensation is performed in the second DU, the phase configuration information may include phase compensation information in the second DU, and the phase compensation information in the second DU may be determined based on the center frequency of a cell of the first signal.

According to an embodiment, the phase compensation information in the second DU is determined based on the following equation,

$$\beta_m = e^{-j2\pi f_{lte}\left(N_{cp,m}+\sum_{l=0}^{m-1}\left(N_{cp,l}+N_{ifft}\right)\right)T_s}$$

here, $f_{lte}$ is the center frequency of the cell of the first signal, and $\left(N_{cp,m} + \sum_{l=0}^{m-1}\left(N_{cp,l} + N_{ifft}\right)\right)T_s$ is a symbol accumulation time.

According to an embodiment, the at least one processor is further configured to obtain information on a frequency shifter for frequency mapping of each of the bandwidth of the first signal and the bandwidth part (BWP) of the second signal, and when the OFDM modulation is individually performed on each of the first signal and the second signal, and the frequency shifter has a zero-phase for each symbol, the phase configuration information may include first phase compensation information in the first DU and second phase compensation information in the RU, the first phase compensation information may be determined based on the difference between the center frequency of a cell of the first signal and the center frequency of the up-conversion, and the second phase compensation information may be determined based on the center frequency of the up-conversion.

According to an embodiment, the first phase compensation information is determined based on the following equation,

$$\alpha_m = e^{+j2\pi f_{lte_d}\left(N_{cp,m}+\sum_{l=0}^{m-1}\left(N_{cp,l}+N_{ifft}\right)\right)T_s}$$

the second phase compensation information is determined based on the following equation,

$$\beta_m = e^{-j2\pi f_0\left(N_{cp,m}+\sum_{l=0}^{m-1}\left(N_{cp,l}+N_{ifft}\right)\right)T_s}$$

here, $f_{lte_d}$ is the difference between the center frequency of the cell of the first signal and the center frequency of the up-conversion, $f_0$ is the center frequency of the up-conversion, and $\left(N_{cp,m} + \sum_{l=0}^{m-1}\left(N_{cp,l} + N_{ifft}\right)\right)T_s$ is a symbol accumulation time.

According to an embodiment, the at least one processor is further configured to obtain information on a frequency shifter for frequency mapping of each of the bandwidth of the first signal and the bandwidth part (BWP) of the second signal, and when the OFDM modulation is individually performed on each of the first signal and the second signal, and the frequency shifter supports a continuous phase, the phase configuration information may include phase compensation information in the second DU, and the phase compensation information in the second DU may be determined based on the center frequency of the cell of the second signal.

According to an embodiment, the phase compensation information in the second DU is determined based on the following equation,

$$\beta_m = e^{-j2\pi\left(f_0+f_{nr_d}\right)\left(N_{cp,m}+\sum_{l=0}^{m-1}\left(N_{cp,l}+N_{ifft}\right)\right)T_s}$$

here, $f_{nr_d}$ is the difference between the center frequency of the cell of the first signal and the center frequency of the up-conversion, $f_0$ is the center frequency of the up-conversion, and $\left(N_{cp,m} + \sum_{l=0}^{m-1}\left(N_{cp,l} + N_{ifft}\right)\right)T_s$ is a symbol accumulation time.

According to various embodiments of the disclosure, a DU device for a new radio (NR) communication system in a wireless communication system may include at least one transceiver and at least one processor, and the at least one processor is configured to obtain center frequency information of the long-term evolution (LTE) communication system in dynamic spectrum sharing (DSS) for the long-term evolution (LTE) communication system and the NR communication system, perform phase compensation for up-conversion of the DSS based on the center frequency information, and transmit a signal on which the phase compensation is performed to a radio unit (RU), and the RU may be related to a DU for the NR communication system and a DU for the LTE communication system.

According to an embodiment, the phase compensation is determined based on the following equation,

$$\beta_m = e^{-j2\pi f_{lte}\left(N_{cp,m}+\sum_{l=0}^{m-1}\left(N_{cp,l}+N_{ifft}\right)\right)T_s}$$

here, $f_{lte}$ is obtained by the center frequency information of the LTE communication system, and $\left(N_{cp,m} + \sum_{l=0}^{m-1}\left(N_{cp,l} + N_{ifft}\right)\right)T_s$ is a symbol accumulation time.

According to an embodiment, the at least one processor is further configured to obtain information on a frequency shifter for frequency mapping of each of a bandwidth part (BWP) of a NR signal and a bandwidth of an LTE signal, wherein the frequency shifter supports a continuous phase, and the continuous phase frequency shifting is implemented as a system and LTE phase compensation is not performed.

According to an embodiment, the NR BWP and the LTE BW may be configured to have different numerology

The methods according to embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

While the disclosure has been shown and described with reference to various embodiments thereof, it will be understood by those skilled in the art that various changes in form and details may be made therein without departing from the spirit and scope of the disclosure as defined by the appended claims and their equivalents.

**Claims**

1. A method performed by a management device in a wireless communication system, the method comprising:

   based on dynamic spectrum sharing (DSS) for a first communication system and a second communication system, identifying that a first digital unit (DU) for the first communication system and a second DU for the second communication system are related to one radio unit (RU) for up-conversion;

based on whether orthogonal frequency-division multiplexing (OFDM) modulation is performed commonly or individually on a first signal of the first communication system and a second signal of the second communication system, and at least one network entity in which phase compensation for the DSS is performed, obtaining configuration information for the phase compensation; and
transmitting the configuration information to the at least one network entity,
wherein the at least one network entity comprises at least one of the first DU, the second DU, or the RU.

2. The method of claim 1,

wherein the OFDM modulation comprises an inverse fast Fourier transform (IFFT) or an inverse discrete Fourier transform (IDFT),
wherein the first communication system comprises long-term evolution (LTE), and
wherein the second communication system comprises new radio (NR).

3. The method of claim 2,

wherein when the OFDM modulation is performed in common to the first signal and the second signal, and the phase compensation is performed in the first DU and the second DU,
wherein the phase compensation configuration information comprises first phase compensation information in the first DU and second phase compensation information in the second DU,
wherein the first phase compensation information is determined based on a difference between a center frequency of a cell of the first signal and a center frequency of a bandwidth part (BWP) of the second signal, and
wherein the second phase compensation information is determined based on the center frequency of the BWP of the second signal.

4. The method of claim 3,

wherein the first phase compensation information is determined based on the following equation,

$$\alpha_m = e^{+j2\pi f_d \left(N_{cp,m} + \sum_{l=0}^{m-1}\left(N_{cp,l} + N_{ifft}\right)\right)T_s},$$

and
wherein the second phase compensation information is determined based on the following equation,

$$\beta_m = e^{-j2\pi f_{nr}\left(N_{cp,m} + \sum_{l=0}^{m-1}\left(N_{cp,l} + N_{ifft}\right)\right)T_s}$$

where $f_d$ is the difference between the center frequency of the cell of the first signal and the center frequency of the BWP of the second signal, $f_{nr}$ is the center frequency of the BWP of the second signal, and $\left(N_{cp,m} + \sum_{l=0}^{m-1}\left(N_{cp,l} + N_{ifft}\right)\right)T_s$ is a symbol accumulation time.

5. The method of claim 2,

wherein when the OFDM modulation is performed in common to the first signal and the second signal, and the phase compensation is performed in the first DU and the RU, the phase compensation configuration information comprises first phase compensation information in the first DU and second phase compensation information in the RU,
wherein the first phase compensation information is determined based on a center frequency of a cell of the first signal, and
wherein the second phase compensation information is determined based on a center frequency of a bandwidth part (BWP) of the second signal.

6. The method of claim 5,

wherein the first phase compensation information is determined based on the following equation,

$$\alpha_m = e^{+j2\pi f_{lte}\left(N_{cp,m}+\Sigma_{l=0}^{m-1}\left(N_{cp,l}+N_{ifft}\right)\right)T_s}$$

and
wherein the second phase compensation information is determined based on the following equation,

$$\beta_m = e^{-j2\pi f_{nr}\left(N_{cp,m}+\Sigma_{l=0}^{m-1}\left(N_{cp,l}+N_{ifft}\right)\right)T_s}$$

where $f_{lte}$ is the center frequency of the cell of the first signal, $f_{nr}$ is the center frequency of the BWP of the second signal, and $\left(N_{cp,m} + \sum_{l=0}^{m-1}\left(N_{cp,l} + N_{ifft}\right)\right)T_s$ is a symbol accumulation time.

7. The method of claim 2,

   wherein when the OFDM modulation is performed in common to the first signal and the second signal, and the phase compensation is performed in the second DU, the phase compensation configuration information comprises phase compensation information in the second DU, and
   wherein the phase compensation information in the second DU is determined based on a center frequency of a cell of the first signal.

8. The method of claim 7,

   wherein the phase compensation information in the second DU is determined based on the following equation,

$$\beta_m = e^{-j2\pi f_{lte}\left(N_{cp,m}+\Sigma_{l=0}^{m-1}\left(N_{cp,l}+N_{ifft}\right)\right)T_s}$$

   where $f_{lte}$ is the center frequency of the cell of the first signal, and $\left(N_{cp,m} + \sum_{l=0}^{m-1}\left(N_{cp,l} + N_{ifft}\right)\right)T_s$ is a symbol accumulation time.

9. The method of claim 2, further comprising obtaining information on a frequency shifter for frequency mapping of each of a bandwidth of the first signal and a bandwidth part (BWP) of the second signal, and

   wherein when the OFDM modulation is individually performed on each of the first signal and the second signal, and the frequency shifter has a zero-phase for each symbol, the phase compensation configuration information comprises first phase compensation information in the first DU and second phase compensation information in the RU,
   wherein the first phase compensation information is determined based on a difference between a center frequency of a cell of the first signal and a center frequency of the up-conversion, and
   wherein the second phase compensation information is determined based on the center frequency of the up-conversion.

10. The method of claim 9,

   wherein the first phase compensation information is determined based on the following equation,

$$\alpha_m = e^{+j2\pi f_{lte_d}\left(N_{cp,m}+\Sigma_{l=0}^{m-1}\left(N_{cp,l}+N_{ifft}\right)\right)T_s},$$

   and
   wherein the second phase compensation information is determined based on the following equation,

$$\beta_m = e^{-j2\pi f_0\left(N_{cp,m}+\Sigma_{l=0}^{m-1}\left(N_{cp,l}+N_{ifft}\right)\right)T_s}$$

where $f_{lte_d}$ is a difference between the center frequency of the cell of the first signal and the center frequency of the up-conversion, $f_0$ is the center frequency of the up-conversion, and

$$\left(N_{cp,m} + \sum_{l=0}^{m-1}\left(N_{cp,l} + N_{ifft}\right)\right)T_s \text{ is a symbol accumulation time.}$$

**11.** The method of claim 2, further comprising obtaining information on a frequency shifter for frequency mapping of each of a bandwidth of the first signal and a bandwidth part (BWP) of the second signal, and

wherein when the OFDM modulation is individually performed on each of the first signal and the second signal, and the frequency shifter supports a continuous phase,
wherein the phase compensation configuration information comprises phase compensation information in the second DU, and
wherein the phase compensation information in the second DU is determined based on a center frequency of a cell of the second signal.

**12.** The method of claim 11,

wherein the phase compensation information in the second DU is determined based on the following equation,

$$\beta_m = e^{-j2\pi(f_0 + f_{nr_d})\left(N_{cp,m} + \sum_{l=0}^{m-1}(N_{cp,l} + N_{ifft})\right)T_s}$$

where $f_{nr_d}$ is a difference between the center frequency of the cell of the second signal and a center frequency of the up-conversion, $f_0$ is the center frequency of the up-conversion, and

$$\left(N_{cp,m} + \sum_{l=0}^{m-1}\left(N_{cp,l} + N_{ifft}\right)\right)T_s \text{ is a symbol accumulation time.}$$

**13.** A method performed by a digital unit (DU) for a new radio (NR) communication system in a wireless communication system, the method comprising:

in dynamic spectrum sharing (DSS) for a long-term evolution (LTE) communication system and the NR communication system, obtaining center frequency information of the long-term evolution (LTE) communication system;
performing phase compensation for up-conversion of the DSS based on the center frequency information; and
transmitting a signal on which the phase compensation is performed to a radio unit (RU),
wherein the RU is related to a DU for the NR communication system and a DU for the LTE communication system.

**14.** The method of claim 13,

wherein the phase compensation is determined based on the following equation,

$$\beta_m = e^{-j2\pi f_{lte}\left(N_{cp,m} + \sum_{l=0}^{m-1}(N_{cp,l} + N_{ifft})\right)T_s}$$

where $f_{lte}$ is obtained by the center frequency information of the LTE communication system, and

$$\left(N_{cp,m} + \sum_{l=0}^{m-1}\left(N_{cp,l} + N_{ifft}\right)\right)T_s \text{ is a symbol accumulation time.}$$

**15.** A management device in a wireless communication system, the device comprising:

at least one transceiver; and
at least one processor,
wherein the at least one processor is configured to perform methods of any one of claim 1 to 14.

110-1

110-2

120

FIG.1A

FIG.1B

FIG.2

EP 4 277 217 A1

DUC

NR DATA mapping

$\times$

$+$

IFFT + CP

$\times$

Phase NR

320

$e^{j2\pi f_0 t}$

330

LTE DATA mapping

$\times$

Phase LTE

310

# FIG.3

$$-2\pi\left(\frac{f_{nr}}{f_s}\right)\left(N_{cp,m} + \sum_{l-0}^{m-1}(N_{cp,l} + N_{ifft})\right)$$

$$+2\pi\left(\frac{f_{lte}}{f_s}\right)\left(N_{cp,m} + \sum_{l-0}^{m-1}(N_{cp,l} + N_{ifft})\right)$$

$$f_d = f_{lte} - f_{nr}$$

# FIG.4A

$$-2\pi\left(\frac{f_{lte}}{f_s}\right)\left(N_{cp,m} + \Sigma_{l-0}^{m-1}(N_{cp,l} + N_{ifft})\right)$$

$$f_d = f_{lte} - f_{nr}$$

FIG.4B

$$f_{nr\_d} = f_{nr\_b} - f_0$$
(520)

(510)

$$f_{lte\_d} = f_{lte\_b} - f_0$$
(530)

# FIG.5

$e^{j2\pi fnr_d(t-(N_{cp,m} + \sum_{l=0}^{m-1} (N_{cp,l}+ N_{ifft}))T_s)}$

$-2\pi\left(\dfrac{f_0}{f_s}\right)\left(N_{cp,m} + \sum_{l=0}^{m-1}(N_{cp,l}+ N_{ifft})\right)$

$e^{j2\pi flte_d(t-(N_{cp,m} + \sum_{l=0}^{m-1} (N_{cp,l}+ N_{ifft}))T_s)}$ (615)

$+2\pi\left(\dfrac{f_{lted}}{f_s}\right)\left(N_{cp,m} + \sum_{l=0}^{m-1}(N_{cp,l}+ N_{ifft})\right)$

$e^{j2\pi f_0 t}$

FIG.6

$$-2\pi\left(\frac{f_{nrd}+f_0}{f_s}\right)\left(N_{cp,m} + \sum_{l=0}^{m-1}(N_{cp,l}+ N_{ifft})\right)$$

FIG.7

FIG.8

DDC

$e^{-j2\pi f_0 t}$

910

$e^{-j2\pi f nr_d (t-(N_{cp,m} + \sum_{l=0}^{m-1}(N_{cp,l} + N_{ifft}))T_s)}$
(930)

LPF

Phase NR — 935

$+2\pi \left(\dfrac{f_0}{f_s}\right)\left(N_{cp,m} + \sum_{l=0}^{m-1}(N_{cp,l} + N_{ifft})\right)$

IFFT
+
CP

NR DATA
mapping

$e^{-j2\pi f lte_d (t-(N_{cp,m} + \sum_{l=0}^{m-1}(N_{cp,l} + N_{ifft}))T_s)}$
(920)

LPF

Phase NR — 925

$-2\pi \left(\dfrac{f_{lted}}{f_s}\right)\left(N_{cp,m} + \sum_{l=0}^{m-1}(N_{cp,l} + N_{ifft})\right)$

IFFT
+
CP

LTE DATA
mapping

$f_{nr\_b}$     $f_0$     $f_{lte\_b}$

$f_{nr\_d} = f_{nr\_b} - f_0$     $f_{lte\_d} = f_{lte\_b} - f_0$

FIG.9

1001

COMMUNICATION
UNIT

1003

STORAGE UNIT

1005

CONTROLLER

# FIG.10

FIG.11A

RU

COMMUNICATION UNIT ⌐1160

STORAGE UNIT ⌐1170

CONTROLLER ⌐1180

# FIG.11B

120

1201 | 1203 | 1205

| COMMUNICATION UNIT | STORAGE UNIT | CONTROLLER |

FIG.12

## INTERNATIONAL SEARCH REPORT

| International application No. |
| --- |
| **PCT/KR2022/002002** |

| A. | CLASSIFICATION OF SUBJECT MATTER |
| --- | --- |

**H04L 27/26**(2006.01)i; **H04W 72/04**(2009.01)i; **H04W 16/14**(2009.01)i

According to International Patent Classification (IPC) or to both national classification and IPC

| B. | FIELDS SEARCHED |
| --- | --- |

Minimum documentation searched (classification system followed by classification symbols)

H04L 27/26(2006.01); H04B 7/0408(2017.01); H04B 7/0413(2017.01); H04L 1/16(2006.01); H04L 27/00(2006.01); H04L 27/36(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DSS(dynamic spectrum sharing), DU(digital unit), RU(radio unit), 상향 변환(up-conversion), 위상 보상(phase compensation), OFDM 변조(modulation), IFFT(inverse fast fourier transform), IDFT(inverse discrete fourier transform), LTE, NR, 중심 주파수(center frequency)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KDDI CORPORATION. New SID on Dynamic spectrum sharing interface enhancement. RP-200219, 3 GPP TSG RAN Meeting #87e, Electronic Meeting. 11 March 2020.<br>See sections 3 and 4.1. | 1-15 |
| A | KR 10-2020-0041220 A (SK TELECOM CO., LTD.) 21 April 2020 (2020-04-21)<br>See paragraphs [0017]-[0026], [0041]-[0048] and [0086]. | 1-15 |
| A | US 2020-0287768 A1 (HUAWEI TECHNOLOGIES CO., LTD.) 10 September 2020 (2020-09-10)<br>See paragraphs [0007]-[0019]; and claims 1-3 and 8. | 1-15 |
| A | KR 10-2020-0033706 A (SAMSUNG ELECTRONICS CO., LTD.) 30 March 2020 (2020-03-30)<br>See paragraphs [0068]-[0078]. | 1-15 |
| A | WO 2018-093660 A1 (QUALCOMM INCORPORATED) 24 May 2018 (2018-05-24)<br>See paragraphs [0007]-[0027]. | 1-15 |

| ☐ Further documents are listed in the continuation of Box C. | ☑ See patent family annex. |
| --- | --- |

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **26 May 2022** | **26 May 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/002002**

| Patent document cited in search report | | | Publication date (day/month/year) | Patent family member(s) | | | Publication date (day/month/year) |
|---|---|---|---|---|---|---|---|
| KR | 10-2020-0041220 | A | 21 April 2020 | KR | 10-2132629 | B1 | 10 July 2020 |
| US | 2020-0287768 | A1 | 10 September 2020 | BR | 112020008286 | A2 | 20 October 2020 |
| | | | | CN | 111406385 | A | 10 July 2020 |
| | | | | CN | 111406385 | B | 28 December 2021 |
| | | | | EP | 3714581 | A1 | 30 September 2020 |
| | | | | US | 11228472 | B2 | 18 January 2022 |
| | | | | WO | 2019-101371 | A1 | 31 May 2019 |
| KR | 10-2020-0033706 | A | 30 March 2020 | EP | 3843352 | A1 | 30 June 2021 |
| | | | | US | 2021-0352526 | A1 | 11 November 2021 |
| | | | | WO | 2020-060296 | A1 | 26 March 2020 |
| WO | 2018-093660 | A1 | 24 May 2018 | CN | 109952792 | A | 28 June 2019 |
| | | | | CN | 109952792 | B | 04 June 2021 |
| | | | | EP | 3542577 | A1 | 25 September 2019 |
| | | | | EP | 3542577 | B1 | 24 March 2021 |
| | | | | US | 10470242 | B2 | 05 November 2019 |
| | | | | US | 2018-0146506 | A1 | 24 May 2018 |

Form PCT/ISA/210 (patent family annex) (July 2019)